# EUROPÄISCHE PATENTANMELDUNG

(11) **EP 3 718 868 A1**
(43) Veröffentlichungstag der Anmeldung: **07.10.2020**
(21) Anmeldenummer: 19167390.4
(22) Anmeldetag: 04.04.2019
(51) Int. Cl.: B62D 53/06, B60P 1/04

(54) **STEUERUNG EINER TRAKTIONSVORRICHTUNG**

(71) Anmelder: Schmitz Cargobull AG, 48341 Altenberge (DE); Ottl, Andreas, 82205 Gilching (DE)
(72) Erfinder: Ottl, Andreas, 82205 Gilching (DE); Hasenstein, Florian, 99842 Ruhla (DE); Hey, Jeffrey, 99867 Gotha (DE)
(74) Vertreter: Knöner, Gregor

(57) **Zusammenfassung**

Es wird eine Steuereinrichtung zum Ansteuern einer Traktionsvorrichtung (10) bereitgestellt. Die Traktionsvorrichtung (10) weist eine Versteifungseinrichtung (20) auf, mit der die Kraft vergrößerbar ist, die ein Auflieger (102) eines Sattelzuges auf einen hinteren Bereich einer Zugmaschine (101) des Sattelzuges zur Erhöhung der Traktion der Zugmaschine (101) aufbringt. Die Steuereinrichtung (50) umfasst mindestens eine erste Schnittstelle zu einer ersten Messeinrichtung (201-203), die eine erste Betriebsgröße der Traktionsvorrichtung (10) erfasst, und mindestens eine zweite Schnittstelle zu einer zweiten Messeinrichtung (201-205), die eine zweite Betriebsgröße der Traktionsvorrichtung (10) oder des Sattelzuges erfasst. Die Steuereinrichtung (50) ist zum Empfang entsprechender Messignale von den mindestens zwei Messeinrichtungen (201-205) ausgestaltet. Die Steuereinrichtung (50) ist eingerichtet, um die Messsignale zur Ermittlung eines Betriebszustandes der Traktionsvorrichtung (10) und/oder des Sattelzuges auszuwerten und die Traktionsvorrichtung (10) basierend auf dem ermittelten Betriebszustand anzusteuern. Weiterhin werden ein entsprechendes System und Verfahren bereitgestellt.

## Beschreibung

### Gebiet der Erfindung

Die vorliegende Erfindung betrifft eine Steuereinrichtung zum Ansteuern einer Traktionsvorrichtung für einen Sattelzug, ein System zur Erhöhung der Traktion einer Zugmaschine, an die mittels einer Kupplung ein Auflieger gekoppelt ist, sowie einen entsprechenden Auflieger. Die Erfindung betrifft des Weiteren ein Verfahren zur Steuerung einer Traktionsvorrichtung.

### Hintergrund der Erfindung

Zum Transport schwerer Güter und insbesondere von Schüttgut werden häufig Sattelzüge eingesetzt, die aus einer Zugmaschine und einem Auflieger bestehen. Bei einem solchen Gespann ist die Zugmaschine mit einer Sattelkupplung versehen. An dem Auflieger ist ein entsprechendes Gegenstück, beispielsweise ein Königszapfen angebracht, der in die Sattelkupplung eingreift. In der Eingriffsstellung wird der Königszapfen in der Sattelkupplung verriegelt, so dass die Zugmaschine den Auflieger ziehen kann.

Für den Transport von Schüttgut werden Auflieger mit Kippkasten (Sattelkipper oder Kippauflieger) verwendet. Durch Kippen des Kippkastens kann das Schüttgut entladen werden. Dabei verbleibt in der Regel eine Restmenge des Schüttguts im Kippkasten. Um die Restmenge des Schüttguts zu entladen, wird das Gespann eine bestimmte Strecke vorwärts gefahren, so dass das restliche Schüttgut entweichen kann. Das Gewicht des in dem Kippkasten verbleibenden Schüttguts belastet jedoch den hinteren Bereich des Aufliegers, wodurch der vordere Bereich des Aufliegers entlastet wird. Über die Sattelkupplung wird dabei auch der hintere Bereich der Zugmaschine, in dem sich die Antriebsräder befinden, entlastet, so dass in derartigen Situationen die Traktion der Zugmaschine verringert wird. Dies führt regelmäßig zu dem Problem, dass die Traktion der Zugmaschine nicht mehr ausreichend ist, um den Auflieger zum Entladen der Restmenge nach vorne zu ziehen.

Aus dem Stand der Technik sind verschiedene Lösungen für dieses Problem bekannt. Ein weiteres Fahrzeug, wie beispielsweise ein Bagger oder eine Raupe, kann eingesetzt werden, um das Gespann eine entsprechende Strecke vorzuziehen, bis das restliche Schüttgut entladen ist. Dies ist jedoch zeit- und kostenintensiv. Eine weitere Lösung ist das Vorsehen eines zusätzlichen hydraulischen Antriebs für die Vorderräder der Zugmaschine. Eine derartige Vorrichtung ist jedoch aufwendig zu installieren und mit hohen Kosten verbunden.

Um diese Probleme zu vermeiden, stellt die Druckschrift DE 20 2018 102 498 U1 eine Vorrichtung zur Erhöhung der Traktion einer Zugmaschine (im folgenden Traktionsvorrichtung) bereit, mit der eine ausreichende Belastung der Antriebsräder der Zugmaschine sichergestellt werden kann, so dass auch in den vorab beschriebenen Situationen die Traktion nicht verloren geht. Die Traktionsvorrichtung übt dabei mittels einer Versteifungseinrichtung, die ein Verschwenken zwischen Zugmaschine und Auflieger um eine Querachse blockiert, eine Kraft auf den hinteren Teil der Zugmaschine aus. Dadurch wird die notwendige Traktion wieder hergestellt.

Beim Entladen eines Sattelzuges mit Kippauflieger muss der Fahrer den Sattelzug steuern als auch den Entladevorgang überwachen. Da die Aufmerksamkeit des Fahrers somit auf andere Tätigkeiten gerichtet ist, kann die zusätzliche Bedienung der vorab genannten Traktionsvorrichtung ein Sicherheitsrisiko darstellen. Insbesondere ist es möglich, bei Fehlbedienung der Traktionsvorrichtung Schaden an dieser und an dem Sattelzug zu verursachen. Weiterhin kann auch ein Sicherheitsrisiko entstehen, wenn die Traktionsvorrichtung versehentlich aktiviert ist, beispielsweise beim Rangieren oder bei schneller Fahrt. Es ist wünschenswert, den Betrieb einer solchen Traktionsvorrichtung sicherer und einfacher zu gestalten.

### Zusammenfassung der Erfindung

Dementsprechend ist eine Aufgabe der vorliegenden Erfindung, die vorab genannten Nachteile zumindest teilweise zu vermeiden oder zu verringern. Insbesondere ist es eine Aufgabe der vorliegenden Erfindung, auf sichere Weise die Traktion einer Zugmaschine mit einem Auflieger zu verbessern.

Diese Aufgabe wird mit Hilfe der Merkmale der unabhängigen Ansprüche gelöst. In den abhängigen Ansprüchen sind bevorzugte Ausführungsformen der Erfindung beschrieben.

Gemäß einem Aspekt der vorliegenden Erfindung wird eine Steuereinrichtung zum Ansteuern einer Traktionsvorrichtung, die eine Versteifungseinrichtung aufweist, bereitgestellt. Mit der Versteifungseinrichtung ist die Kraft vergrößerbar, die ein Auflieger eines Sattelzuges auf einen hinteren Bereich einer Zugmaschine des Sattelzuges zur Erhöhung der Traktion der Zugmaschine aufbringt. Die Steuereinrichtung umfasst mindestens eine erste Schnittstelle zu einer ersten Messeinrichtung, die eine erste Betriebsgröße der Traktionsvorrichtung erfasst, sowie mindestens eine zweite Schnittstelle zu einer zweiten Messeinrichtung, die eine zweite Betriebsgröße der Traktionsvorrichtung oder des Sattelzuges erfasst. Die Steuereinrichtung ist zum Empfang entsprechender Messignale von den mindestens zwei Messeinrichtungen ausgestaltet. Die Steuereinrichtung ist eingerichtet, um die Messsignale zur Ermittlung eines Betriebszustandes der Traktionsvorrichtung und/oder des Sattelzuges auszuwerten, sowie um die Traktionsvorrichtung basierend auf dem ermittelten Betriebszustand anzusteuern.

Gemäß einem weiteren Aspekt der Erfindung wird ein System zur Erhöhung der Traktion einer Zugmaschine eines Sattelzuges, an die mittels einer Kupplung ein Auflieger koppelbar ist, bereitgestellt. Das System umfasst die Steuereinrichtung, die Traktionsvorrichtung und mindestens die erste Messeinrichtung und die zweite Messeinrichtung. Die Steuereinrichtung ist mit den mindestens zwei Messeinrichtungen zum Empfangen der Messignale gekoppelt. Die Versteifungseinrichtung der Traktionsvorrichtung ist ausgestaltet, um mit dem Auflieger und der Zugmaschine zusammenzuwirken und einer Kippbewegung des Aufliegers relativ zur Zugmaschine derart entgegenzuwirken, dass die Kraft erhöht wird, die der Auflieger auf einen hinteren Bereich der Zugmaschine aufbringt.

Mit einer derartigen Steuereinrichtung und einem derartigen System kann eine Steuerung der Traktionsvorrichtung erzielt werden, die den Fahrer des Sattelzuges entlastet und die Sicherheit erhöht. Insbesondere kann die Traktionsvorrichtung automatisch basierend auf Daten von den Messeinrichtungen gesteuert werden. Beim Erkennen entsprechender Betriebszustände kann die Traktionsvorrichtung automatisch aktiviert oder deaktiviert werden, beispielsweise durch das Ausfahren oder Einfahren der Versteifungseinrichtung. Bei Erkennen eines sicherheitsrelevanten Betriebszustandes kann die Traktionsvorrichtung somit beispielsweise automatisch deaktiviert werden.

Das Messignal kann ein elektrisches Signal von einem entsprechenden Sensor sein, das die Steuereinrichtung über eine Schnittstelle in Form eines elektrischen Anschlusses erhält. Das Messignal kann jedoch auch ein Informationssignal oder Datensignal sein, das die Steuereinrichtung von der Messeinrichtung erhält, beispielsweise über eine Schnittstelle in Form eines Buses (z.B. CAN Bus) oder einer drahtlose Verbindung. Betriebsgrößen können beispielsweise Druck, Knickwinkel zwischen Auflieger und Sattelzug, Wegstrecke der Versteifungseinrichtung, Geschwindigkeit des Aufliegers o.ä. sein, wobei der Betriebszustand beispielsweise angibt, dass ein bestimmter Druck oder eine bestimmte Stellung der Versteifungseinrichtung erreicht wurde, oder dass ein bestimmter Knickwinkel oder Böschungswinkel erreicht wurde.

Die Steuereinrichtung kann eingerichtet sein, um einen Betriebszustand zu identifizieren, der nicht einem vorbestimmten Betriebszustand entspricht, in dem insbesondere der Traktionsvorrichtung oder dem Sattelzug Schaden droht (z.B. bei Aktivierung der Traktionsvorrichtung oder bereits aktivierter Traktionsvorrichtung). Das können beispielsweise ein zu hoher Druck, ein zu hoher Knickwinkel oder eine zu hohe Geschwindigkeit sein. Die Steuereinrichtung ist weiterhin eingerichtet, um die Traktionsvorrichtung bei Identifizierung eines solchen Betriebszustand anzusteuern durch: Blockieren der Aktivierung der Traktionsvorrichtung; Deaktivieren der Traktionsvorrichtung; und/oder Ausgeben eines Signals, das den identifizierten Betriebszustand angibt. Die Steuereinrichtung ist insbesondere imstande, zumindest diese drei Steuerfunktionen je nach identifiziertem Betriebszustand auszuführen. Die Steuereinrichtung kann bei einem identifizierten Betriebszustand auch zwei oder drei dieser Steuerfunktionen ausführen, beispielsweise Deaktivieren der Traktionsvorrichtung (z.B. durch Einfahren der Versteifungseinrichtung) und Ausgeben eines Signals. Das Signal kann ein Warnsignal und/oder Anzeigesignal enthalten und an eine Ausgabeeinheit übermittelt werden, die an der Zugmaschine oder am Auflieger vorgesehen ist oder als mobiles Gerät (Smartphone o.ä.) bereitgestellt wird.

Die Steuereinrichtung weiterhin eingerichtet sein, um die Messsignale einer der Messeinrichtungen basierend auf den Messignalen einer anderen der Messeinrichtungen zu plausibilisieren. Beispielsweise können die Messignale einer ersten Messeinrichtung, die an der Traktionsvorrichtung vorgesehen ist, plausibilisiert werden basierend auf Messignalen der zweiten Messeinrichtung, die z. B. eine Betriebsgröße des Sattelzuges erfasst, oder umgekehrt. Insbesondere können die erste und die zweite Messeinrichtung redundante Informationen erfassen. Somit kann die Sicherheit des Systems weiter erhöht werden.

Die Steuereinrichtung kann auch ausgestaltet sein, um basierend auf einem Vergleich des ersten Messsignals und des zweiten Messsignals eine Fehlfunktion einer der Messeinrichtungen oder der Traktionsvorrichtung festzustellen. Die Steuereinrichtung kann ein entsprechendes Signal ausgeben, das das Anzeigen der Fehlfunktion oder die Ausgabe eines Warnsignals bewirkt, beispielsweise mittels einer Ausgabeeinheit.

Gemäß einer Ausführungsform ist die erste Messeinrichtung eine Messeinrichtung aus einer ersten Gruppe, die besteht aus:
- einem Kraftbeaufschlagungssensor, der eine Messgröße erfasst, die abhängig ist von einer Kraftbeaufschlagung der Versteifungseinrichtung. Das kann insbesondere ein Drucksensor sein, der einen Druck in der Versteifungseinrichtung erfasst, beispielsweise in einem Balg oder einem hydraulischen oder pneumatischen Zylinder;
- einem Wegsensor, der eine Distanz erfasst, über die die Versteifungseinrichtung relativ zu einem eingefahrenen Zustand ausgefahren ist; und
- einem Endlagensensor, der das Erreichen einer vorbestimmten Verschwenkung der Versteifungseinrichtung gegenüber einer Konsole, auf die von der Versteifungseinrichtung eine Kraft aufgebracht wird, wenn die Versteifungseinrichtung ausgefahren ist, erfasst.

Die zweite Messeinrichtung ist vorzugsweise eine andere Messeinrichtung aus der ersten Gruppe oder eine Messeinrichtung aus einer zweiten Gruppe. Die zweite Gruppe besteht aus:
- einer Knickwinkelmesseinrichtung, die einen Knickwinkel zwischen Zugmaschine und Auflieger erfasst; und
- einer Geschwindigkeitsmesseinrichtung, die eine Geschwindigkeit des Aufliegers erfasst.

Wenn die erste und die zweite Messeinrichtung derart ausgestaltet sind, können ein sicherheitsrelevanter Betriebszustand identifiziert werden und mittels der Steuerung die Sicherheit des Betriebs der Traktionsvorrichtung verbessert werden. Vorzugsweise sind mindestens drei Schnittstellen zu den drei Messeinrichtungen der ersten Gruppe vorgesehen, es können aber auch nur eine erste und eine zweite Schnittstelle zu einem Endlagensensor und einem Kraftbeaufschlagungssensor vorgesehen sein. Ebenfalls ist es vorteilhaft, neben einer, zwei oder drei Messeinrichtungen der ersten Gruppe auch eine oder beide der Messeinrichtungen der zweiten Gruppe vorzusehen, d.h. es können sämtlichen dieser Messeinrichtungen und entsprechende Schnittstellen vorgesehen sein.

Beispielsweise kann die erste Messeinrichtung der Endlagensensor sein und die zweite Messeinrichtung der Knickwinkelmesseinrichtung sein, wobei die Steuereinrichtung des Weiteren mindestens eine dritte Schnittstelle zu einer dritten Messeinrichtung aufweisen kann, die eine andere Messeinrichtung aus der ersten Gruppe ist. Vorzugsweise ist die dritte Messeirichtung der Kraftbeaufschlagungssensor und die Steuereinrichtung kann des Weiteren mindestens eine vierte Schnittstelle zu dem Wegsensor aufweisen. Die Steuereinrichtung ist eingerichtet, um den Betriebszustand der Traktionsvorrichtung (z.B. ausgefahren/eingefahren) und/oder des Sattelzuges (z.B. Knickwinkel oder Böschungswinkel) durch Auswertung von Messsignalen dieser Messeinrichtungen zu ermitteln und um die Traktionsvorrichtung basierend auf dem/den ermittelten Betriebszustand/Betriebszuständen anzusteuern.

Der Wegsensor kann als Betriebsgröße die Stellung der Versteifungseinrichtung angeben, beispielsweise durch einen Geber, der bei Erreichen einer vorbestimmten ausgefahrenen Stellung ein Signal ausgibt, oder kann ein Sensor sein, der ein stufenloses Distanzsignal ausgibt. Neben mechanischen Sensoren (Seilzugsensor; Linearpotentiometer) oder optischen Sensoren kann zum Beispiel auch ein Ultraschallsensor zum Einsatz kommen, der eine Distanz bestimmt, über die die Versteifungseinrichtung ausgefahren wurde (z.B. Abstand zwischen den Endplatten bei einem Balg). Der Wegsensor kann aber auch als Winkelsensor ausgestaltet sein, der z.B. den Winkel misst, um den eine Schwinge bei Ausfahren der Versteifungseinrichtung verschwenkt wird.

Der Endlagensensor kann beispielsweise Sensorelemente aufweisen, die an einem unteren Ende der Versteifungseinrichtung angeordnet sind, an dem die Versteifungseinrichtung Kraft auf eine Konsole (bzw. Platte oder Auflager) aufbringt. Die Versteifungseinrichtung kann beispielsweise auf die Konsole drücken und auf dieser bei Kurvenfahrt des Sattelzuges gleiten, wobei die Versteifungseinrichtung relativ zur Konsole verschwenkt wird. Dabei kann von den Sensorelementen detektiert werden, wenn die Versteifungseinrichtung das Ende der Konsole erreicht. Die Sensorelemente können als mechanische Drucksensoren ausgestaltet sein, oder sie können das Erreichen des Endes der Konsole kapazitiv oder induktiv detektieren. Vorzugsweise ist an jeder Seite in Verschwenkungsrichtung der Versteifungseinrichtung ein entsprechendes Sensorelement vorgesehen. Die Sensorelemente können jedoch auch an der Konsole vorgesehen sein.

Die Knickwinkelmesseinrichtung kann insbesondere den Winkel zwischen Zugmaschine und Auflieger messen, der bei Kurvenfahrt durch Verschwenken des Aufliegers um einen Königszapfen der Kupplung um eine im Wesentlichen vertikale Drehachse auftritt. Es können z. B. elektrische Sensoren oder Winkelgeber an der Kupplung vorgesehen sein, die den Knickwinkel als Betriebsgröße erfassen. Die Knickwinkelmesseinrichtung kann auch dadurch implementiert werden, dass der Knickwinkel aus den unterschiedlichen Drehzahlen der Räder des Aufliegers und/oder der Zugmaschine bestimmt wird, die aufgrund der unterschiedlichen zurückgelegten Wegstrecken der Räder auftreten. Insbesondere kann eine Knickwinkelmesseinrichtung vorgesehen sein, wie sie in der Druckschrift EP 2 781 378 B1 beschrieben ist.

Die Geschwindigkeitsmesseinrichtung ist vorzugsweise am Auflieger vorgesehen und erfasst die Geschwindigkeit des Aufliegers als Messgröße. Dies kann insbesondere eine der bei herkömmlichen Aufliegern bereits vorhandenen Geschwindigkeitsmesseinrichtungen sein, deren Signal z.B. zum Steuern einer Liftachse oder von einem Bremssystem verwendet wird. Das vorliegende System braucht eine entsprechende Geschwindigkeitsmesseinrichtung somit nicht zu umfassen, die Steuereinrichtung kann z.B. an der entsprechenden Schnittstelle lediglich auf ein Geschwindigkeitssignal zugreifen, das auf einem Signal-Bus des Aufliegers (z. B. CAN-Bus) oder einer Signalleitung bereitgestellt wird.

Bei einer Ausführungsform weist die erste oder die zweite Messeinrichtung einen Endlagensensor oder eine Knickwinkelmesseinrichtung auf. Die Steuereinrichtung ist eingerichtet, um basierend auf dem Messignal der entsprechenden Messeinrichtung das Erreichen einer vorbestimmten maximalen Verschwenkung zwischen der Versteifungseinrichtung und der Konsole zu bestimmen, und bei Vorliegen der maximalen Verschwenkung die Traktionsvorrichtung derart anzusteuern, dass die Versteifungseinrichtung in eine eingefahrene Stellung gebracht wird. Dies kann passiv erfolgen, z. B. durch Ablassen von Luft oder Druckreduzierung aus einem Balg, oder eine aktive Einfahreinrichtung kann angesteuert werden, die die Versteifungseinrichtung aktiv in die eingefahrene Stellung bringt. Da der Knickwinkel proportional ist zur Verschwenkung zwischen Versteifungseinrichtung und Konsole, kann mit bereits einer dieser Messeinrichtungen sichergestellt werden, dass die ausgefahrene Versteifungseinrichtung bei Kurvenfahrt nicht von der Konsole abrutscht, was eine Beschädigung der Traktionsvorrichtung oder der Zugmaschine bzw. des Aufliegers zur Folge haben kann. Die Betriebssicherheit wird damit erhöht.

Ferner ist es vorteilhaft, wenn sowohl eine Knickwinkelmesseinrichtung als auch ein Endlagensensor vorgehen sind. Die Messsignale der beiden Messeinrichtungen können dann plausibilisiert werden und Fehlfunktionen können erkannt werden. Auch bei Ausfall einer der Messeinrichtungen kann aufgrund der Redundanz ein sicherer Betrieb weiter gewährleistet werden.

Bei einer Ausführungsform weist die erste oder die zweite Messeinrichtung einen Kraftbeaufschlagungssensor oder einen Wegsensor auf. Die Steuereinrichtung ist eingerichtet, um basierend auf dem Messignal der entsprechenden Messeinrichtung zu bestimmen, ob sich die Versteifungseinrichtung in einer eingefahren oder einer ausgefahren Stellung befindet. Somit kann beispielsweise beim Ankoppeln sichergestellt werden, dass die Traktionsvorrichtung deaktiviert ist. Bei aktivierter Traktionsvorrichtung kann diese angesteuert werden, um die Versteifungseinrichtung einzufahren oder um ein entsprechendes Warnsignal auszugeben. Vorteilhaft ist es weiterhin, wenn beide Sensoren vorgesehen sind. So können die Sensorsignale plausibilisiert und die Sicherheit weiter verbessert werden. Beispielsweise kann eine Fehlfunktion eines der Sensoren oder der Versteifungseinrichtung festgestellt werden, wenn der Kraftbeaufschlagungssensor als Drucksensor einen Druckanstieg registriert, ohne dass der Wegsensor ein Ausfahren der Versteifungseinrichtung erfasst.

Weiterhin kann die die Steuereinrichtung ausgestaltet sein, um basierend auf dem Messignal des Wegsensors einen Böschungswinkel zwischen Zugmaschine und Auflieger als Betriebszustand zu bestimmen. Als Böschungswinkel wird hierin der Winkel bei einem Verschwenken zwischen Zugmaschine und Auflieger um eine (im Wesentlichen horizontale) Querachse durch die Kupplung bezeichnet, wie sie bei Fahrt über eine Kuppe oder durch eine Senke auftritt. Bei großen Böschungswinkeln (Fahrt über eine Kuppe) kann die Belastung der Versteifungseinrichtung stark ansteigen und zu Schäden führen. Das Ansteuern der Traktionsvorrichtung kann das Einfahren der Versteifungseinrichtung umfassen, wenn ein Böschungswinkel oberhalb eines Grenzwerts festgestellt wird.

Ebenfalls kann zusätzlich oder alternativ ein Überdruckventil vorgesehen sein, das bei zu großem Druck in der Versteifungseinrichtung den Druckanstieg begrenzt.

Weiterhin kann die Steuereinrichtung eingerichtet sein, um basierend auf einem Messignal des Wegsensors einen Betriebszustand festzustellen, in dem beim Ausfahren der Versteifungseinrichtung ein vorbestimmter Grenzwert der ausgefahrenen Wegstrecke überschritten wird. Dadurch kann erkannt werden, dass keine Konsole vorhanden ist, auf der sich die Versteifungseinrichtung abstützen kann, beispielsweise wenn der Auflieger nicht angekoppelt ist oder wenn die Zugmaschine keine entsprechende Konsole aufweist. Die Steuereinrichtung kann dann die Traktionsvorrichtung ansteuern, um die Versteifungseinrichtung einzufahren oder um ein entsprechendes Warnsignal auszugeben. Schaden an der Zugmaschine oder der Traktionsvorrichtung kann somit verhindert werden.

Die zweite Messeinrichtung kann eine Geschwindigkeitsmesseinrichtung umfassen, die eine Geschwindigkeit des Aufliegers erfasst. Die Steuereinrichtung kann eingerichtet sein, um basierend auf dem Messignal der Geschwindigkeitsmesseinrichtung zu ermitteln, ob die Geschwindigkeit des Aufliegers eine vorbestimmte Grenzgeschwindigkeit übersteigt, und um bei Überschreiten der Grenzgeschwindigkeit die Versteifungseinrichtung in eine eingefahrene Stellung zu bringen. Dadurch kann die Sicherheit weiter erhöht werden.

Vorteilhafterweise ist die Steuereinrichtung so eingerichtet, dass sie die Versteifungseinrichtung bei aktivierter Traktionsvorrichtung in eine eingefahrene Stellung bringt, wenn die Steuereinrichtung basierend auf mindestens einem der Messsignale feststellt, dass ein Knickwinkel zwischen Zugmaschine und Auflieger einen Grenzwert übersteigt oder ein Böschungswinkel zwischen Zugmaschine und Auflieger einen Grenzwert übersteigt. Weiterhin kann die Steuereinrichtung die Versteifungseinrichtung in die eingefahrene Stellung bringen, wenn die Geschwindigkeit des Aufliegers einen Grenzwert übersteigt oder der Auflieger nicht an eine Zugmaschine gekoppelt ist. Somit kann in verschiedenen Betriebszuständen ein Schaden an der Traktionsvorrichtung oder am Sattelzug vermieden werden und die Sicherheit erhöht werden. Bei Vorliegen derartiger Betriebszustände kann des Weiteren ein optisches oder akustisches Warnsignal ausgegeben werden. Vorzugsweise werden die beiden erstgenannten, optional auch der drittgenannte und/oder viertgenannte Betriebszustand überprüft. Grenzwerte für Knickwinkel, Böschungswinkel bzw. Druck können basierend auf der konstruktiven Ausgestaltung der Traktionsvorrichtung bestimmt werden, z.B. in Abhängigkeit von der Breite der Konsole oder der Drucktoleranz des Balgs. Der Grenzwert für Geschwindigkeit kann in einem Bereich von 20 km/h bis 40 km/h liegen und z.B. 30 km/h betragen.

Bei einer Ausführungsform ist die Steuereinrichtung mit einer Ausgabeeinheit gekoppelt oder koppelbar, wobei die Steuereinrichtung derart eingerichtet ist, dass sie den ermittelten Betriebszustand der Traktionsvorrichtung an die Ausgabeeinheit zur Anzeige übermittelt. Das System kann die Ausgabeeinheit umfassen, die Ausgabeeinheit kann aber auch getrennt vom System bereitgestellt werden, z. B. in Form eines Smartphones oder anderen mobilen Endgerätes. Die Steuereinrichtung kann beispielsweise ein Ausgabesignal übermitteln, das bewirkt, dass die Ausgabeeinheit den Status der Traktionsvorrichtung anzeigt und/oder ein optisches oder akustisches Warnsignal ausgibt, wenn bei ausgefahrener Versteifungseinrichtung ein Knickwinkel, ein Böschungswinkel, oder eine Geschwindigkeit oberhalb eines jeweiligen Grenzwertes festgestellt wird, keine Zugmaschine angekoppelt ist, eine Zugmaschine ohne Konsole angekoppelt ist, oder ein Fehler beim Deaktivieren der Traktionsvorrichtung auftritt.

Die Ausgabeeinheit weist vorzugsweise eine Anzeige auf und ist mit der Steuereinrichtung über eine drahtgebundene Verbindung (z. B. elektrisches Kabel oder Datenbus) oder über eine drahtlose Verbindung, wie z. B. WLAN o.ä. verbunden. Die Ausgabeeinheit kann auch zwei oder mehr Anzeigen aufweisen, z.B. eine im Führerhaus der Zugmaschine und eine weitere in Form eines mobilen Endgerätes.

Vorteilhaft ist es weiterhin, wenn die Steuereinrichtung mit einer Eingabeeinheit gekoppelt oder koppelbar ist. Die Steuereinrichtung ist vorzugsweise eingerichtet, um von der Eingabeeinheit ein Eingabesignal zu empfangen, und basierend auf dem Eingabesignal die Traktionsvorrichtung zu aktivieren, insbesondere durch Ausfahren der Versteifungseinrichtung. Das System kann die Eingabeeinheit auch umfassen. Die Eingabeeinheit kann über eine drahtgebundene Verbindung oder eine drahtlose Verbindung mit der Steuereinrichtung gekoppelt sein.

Die Eingabeeinheit kann ein Bedienfeld am Auflieger umfassen. Die Eingabeeinheit kann auch als Bedienfeld (bzw. Bedienmodul) oder einfacher Schalter in der Zugmaschine ausgestaltet sein. Bei einer bevorzugten Ausführung umfasst die Eingabeeinheit ein mobiles Endgerät, wie beispielsweise ein Smartphone, das drahtlos mit der Steuereinrichtung kommuniziert. Vorzugsweise ist eine Kombination dieser Eingabeeinheiten vorgesehen.

Drahtlose Verbindungen, die von der Ausgabeeinheit oder der Eingabeeinheit verwendet werden können, sind insbesondere WLAN, Bluetooth, ZigBEE, Z-wave oder ähnliche.

Vorzugsweise sind die Ausgabeeinheit und die Eingabeeinheit in einer Einheit kombiniert, wie beispielsweise einem Bedienmodul, dass am Auflieger oder im Führerhaus der Zugmaschine vorgesehen ist, oder in einem mobilen Endgerät, wie einem Smartphone. Mehrere derartiger Eingabe/Ausgabeeinheiten können vorgesehen sein.

Bei einer Ausführungsform weist die Traktionsvorrichtung eine Rückzugseinrichtung mit einem angetriebenen Aktuator auf, mit der die Versteifungseinrichtung durch Betätigen des Aktuators von einer ausgefahrenen Stellung in eine eingefahren Stellung bringbar ist, wobei der Aktuator von der Steuereinrichtung basierend auf den Messsignalen ansteuerbar ist. Der Aktuator kann beispielsweise elektrisch, hydraulisch oder pneumatisch angetrieben werden. Er kann als hydraulischer oder pneumatischer Zylinder oder als elektrischer Aktuator ausgestaltet sein. Die Rückzugseinrichtung kann auch als Einfahreinrichtung oder Einfahrmechanismus bezeichnet werden, die das Einfahren der Versteifungseinrichtung, z. B. eines Balgs, unterstützt oder bewirkt. Die Rückzugseinrichtung kann auch passiv ausgestaltet sein (ohne angetriebenen Aktuator), und beispielsweise ein Zurückstellen durch Federelemente oder ähnliches bewirken.

Die Rückzugseinrichtung umfasst vorzugsweise ein Umlenksystem. Dadurch kann der Aktuator so an dem Auflieger montiert werden, dass er das An-/Abkoppeln sowie den Betrieb der Traktionsvorrichtung nicht stört. Bei einer Ausführungsform weist das Umlenksystem ein oder mehrere Zugseile auf, die an einem Abschlusselement, insbesondere einer Pfanne (z. B. deren Rand), der Versteifungseinrichtung befestigt sind, und über die eine rückstellende Kraft auf die Versteifungseinrichtung ausübbar ist oder aufgebracht wird. Die rückstellende Kraft kann von einem Federmechanismus oder dem angetriebenen Aktuator aufgebracht werden, der am anderen Ende an dem Zugseil befestigt ist. Die Versteifungseinrichtung ist damit auf schnelle und sichere Weise in die eingefahrene Stellung bringbar.

Bei einer Ausführungsform weist die Traktionsvorrichtung eine der nachfolgend beschriebenen Ausgestaltungen auf. Insbesondere kann die Traktionsvorrichtung wie in der Druckschrift DE 20 2018 102 498 U1 beschrieben ausgestaltet sein.

Der hintere Bereich der Zugmaschine, auf den die Traktionsvorrichtung eine Kraft aufbringt, kann ein Bereich sein, der hinter dem Schwerpunkt der Zugmaschine und insbesondere hinter der Kupplung (z.B. Sattelkupplung) der Zugmaschine liegt. Die relativen Positionsangaben "vor" und "hinter" sind bei einer Zugmaschine bzw. einem Auflieger klar definiert und beziehen sich auf die Fahrtrichtung dieser.

Die Versteifungseinrichtung kann einer Kippbewegung des Aufliegers relativ zur Zugmaschine um eine Drehachse quer zur Längsachse der Zugmaschine in einer Richtung entgegenwirken, die einem Absenken des hinteren Teils des Aufliegers und/oder einem Anheben eines vorderen Teils des Aufliegers entspricht. Die Drehachse der Kippbewegung entspricht beispielsweise einer Lagerung der Sattelkupplung. Insbesondere wird mit der Versteifungseinrichtung eine Verringerung des Abstandes zwischen Rahmen der Zugmaschine und Bodenteil des Aufliegers in einen Bereich hinter der Kupplung entgegengewirkt. Durch das Versteifen der Verbindung zwischen Zugmaschine und Auflieger und die damit erhöhte Kraft, die auf den hinteren Bereich der Zugmaschine aufgebracht wird, erhöht sich die Kraft auf die im hinteren Bereich der Zugmaschine angeordneten Antriebsräder, so dass die Traktion der Zugmaschine verbessert wird.

Die Versteifungseinrichtung ist vorzugsweise ausgestaltet, um in Fahrtrichtung hinter der Kupplung an dem Auflieger angebracht zu werden und auf die Zugmaschine eine Kraft aufzubringen, um Zugmaschine und Auflieger in einem Bereich hinter der Kupplung auseinanderzudrücken. Die Versteifungseinrichtung kann eine eingefahrene Stellung bzw. "Schlafstellung" aufweisen, in der die Kippbewegung zwischen Auflieger und Zugmaschine freigegeben ist sowie eine ausgefahrene Stellung, in der die Versteifungseinrichtung der Kippbewegung zwischen Auflieger und Zugmaschine entgegenwirkt. Die Versteifungseinrichtung kann beispielsweise ein ausfahrbares Element aufweisen, das durch Ausdehnung bzw. durch Ausfahren die Versteifungseinrichtung von der eingefahrenen Stellung in die ausgefahrene Stellung bringt. Das ausfahrbare Element ist vorzugsweise ein Balg, eine Blase oder ein pneumatischer oder hydraulischer Zylinders.

Die Steuereinrichtung ist insbesondere ausgestaltet, um die Traktionsvorrichtung zu aktivieren, indem sie die Versteifungseinrichtung in einen ausgefahrenen Zustand bringt, in dem diese einer Kippbewegung zwischen Auflieger und Zugmaschine entgegenwirkt, und um die Traktionsvorrichtung zu deaktivieren, indem sie die Versteifungseinrichtung in einen eingefahrenen Zustand bringt, in dem diese die Kippbewegung freigibt. Das System kann z. B. ein Steuerventil aufweisen, das von der Steuereinrichtung angesteuert wird und über das die Versteifungseinrichtung mit Druckluft beaufschlagbar ist. Das Steuerventil (z.B. Relaisventil) kann an einen Arbeitskreis des Druckluftsystems des Aufliegers oder der Zugmaschine anschließbar oder angeschlossen sein. Die Versteifungseinrichtung kann einen entsprechenden pneumatischen Anschluss aufweisen. Die Steuereinrichtung kann das Steuerventil gemäß dem ermittelten Betriebszustand und gemäß eines von einer Eingabeeinheit empfangenen Steuersignals ansteuern. Bei einer derartigen Ausgestaltung kann die Versteifung der Verbindung zwischen Zugmaschine und Auflieger auf einfache Art und Weise erfolgen, insbesondere kann das bestehende Druckluftsystem der Zugmaschine oder des Aufliegers zu diesem Zweck verwendet werden.

Besonders bevorzugt weist die Versteifungseinrichtung einen pneumatisch ausfahrbaren Balg auf, der ein erstes Ende aufweist, das ausgestaltet ist, um an dem Auflieger angebracht zu werden. Der Balg weist weiterhin ein zweites gegenüberliegendes Ende auf, an dem ein Abschlusselement zur Kraftübertragung vorgesehen ist, wie beispielsweise eine Pfanne oder Platte, die mit einem Ende des Balgs zusammenwirkt. Somit lässt sich mittels der Versteifungseinrichtung auf einfache und effektive Weise eine Kraft bzw. ein Anpressdruck auf die Zugmaschine übertragen. Die Pfanne kann beispielsweise eine rechteckige, quadratische oder kreisförmige/ovale Bodenfläche und einen Rand aufweisen, wobei in der Pfanne ein Ende des Balgs aufgenommen wird.

Die Traktionsvorrichtung kann des Weiteren eine Konsole aufweisen, die an einem Rahmen der Zugmaschine bzw. an einem Bodenteil des Aufliegers anbringbar ist und die ausgestaltet ist, um mit dem Abschlusselement des Balgs zusammenzuwirken, wenn sich die Versteifungseinrichtung in der ausgefahrenen Stellung befindet. Es findet somit eine Kraftübertragung vom Balg über das Abschlusselement auf die Konsole statt, sodass einer Kippbewegung zwischen Auflieger und Zugmaschine effektiv entgegengewirkt und eine entsprechende Kraft auf den hinteren Bereich der Zugmaschine aufgebracht wird.

Die Traktionsvorrichtung kann des Weiteren eine Schwenkeinrichtung aufweisen, die ausgestaltet ist, um bei aktivierter Traktionsvorrichtung (insbesondere ausgefahrener Versteifungseinrichtung) ein Verschwenken der Zugmaschine relativ zum Auflieger zu ermöglichen. Verschwenken bezieht sich auf die Drehung des Aufliegers relativ zur Zugmaschine, die bei Kurvenfahrt um die Kupplung stattfindet und den Knickwinkel bestimmt. Die Schwenkeinrichtung kann ein Element aufweisen, das bei aktivierter Versteifungseinrichtung mit einem ersten Teil der Traktionsvorrichtung (insbesondere der Versteifungseinrichtung) ortsfest verbunden ist und das sich auf einem zweiten Teil der Vorrichtung (insbesondere der Konsole) abstützt und relativ zu diesem zweiten Teil der Vorrichtung beweglich ist, wobei das Element eine Kraft zwischen dem ersten Teil der Vorrichtung und dem zweiten Teil der Vorrichtung überträgt, um der Kippbewegung entgegenzuwirken. Das Element kann an der Versteifungseinrichtung befestigt sein und auf der Konsole gleiten oder abrollen.

Vorzugsweise weist die Schwenkeinrichtung mindestens ein Gleitelement auf, das an dem ersten oder dem zweiten Teil der Traktionsvorrichtung angebracht ist, beispielsweise an der Versteifungseinrichtung, insbesondere an dem vorab genannten Abschlusselement. Die Traktionsvorrichtung kann eine Konsole mit einer Gleitfläche umfassen, die an der Zugmaschine bzw. dem Auflieger anbringbar ist, wobei sich das Gleitelement bei aktivierter Traktionsvorrichtung auf der Gleitfläche abstützt und auf dieser gleitet.

Bei anderen Ausführungsformen kann das Gleitelement oder ein anderes Element, das die Relativbewegung ermöglicht, auch an der Konsole angebracht sein und auf einer Fläche der Versteifungseinrichtung gleiten, abrollen oder entsprechend gelagert sein.

Das Element, insbesondere das Gleitelement, kann einen Körper aus Kunststoff umfassen. Beispielsweise kann ein Kunststoff verwendet werden, der auf Polyamid (PA) oder Nylon basiert. Insbesondere kann ein Kunststoff verwendet werden, der gute Gleiteigenschaften aufweist. Die Konsole bzw. die Gleitfläche können aus Stahl gefertigt sein. Sie können lackiert sein oder mit einer Beschichtung versehen sein, die vorteilhafte Gleiteigenschaften aufweist. Bei anderen Ausgestaltungen können auch Rollen oder ähnliches als Elemente eingesetzt werden, die ein Verschwenken zwischen Versteifungseinrichtung und Konsole ermöglichen.

Bei einer Ausführungsform weist die Versteifungseinrichtung ein erstes Ende, das ausgestaltet ist, um an dem Auflieger oder der Zugmaschine angebracht zu werden, und ein zweites Ende auf, wobei die Vorrichtung des Weiteren ein Stabilisierungselement aufweist, das an dem zweiten Ende der Versteifungseinrichtung angebracht ist. Das Stabilisierungselement ist ausgestaltet, um zumindest bei aktivierter Versteifungseinrichtung diese in einer Richtung zu stützen, die senkrecht zur der Richtung ist, in der die Versteifungseinrichtung Kraft auf den hinteren Bereich der Zugmaschine aufbringt. Vorzugsweise stabilisiert das Stabilisierungselement die Versteifungseinrichtung gegen horizontal wirkende Kräfte. Durch ein derartiges Abstützen der Versteifungseinrichtung kann eine Beschädigung dieser vermieden werden. Die Stabilisierung ist gerade bei Ausgestaltungen von Vorteil, bei denen für Kurvenfahrten eine Schwenkeinrichtung vorgesehen ist (z. B. mit Gleitelementen), da die Schwenkeinrichtung Kräfte quer zur Fahrtrichtung auf das zweite Ende der Versteifungseinrichtung aufbringen kann.

Das Stabilisierungselement kann eine Schwinge aufweisen, die an einem Ende an dem Auflieger bzw. der Zugmaschine anbringbar bzw. angebracht ist und deren anderes Ende an dem zweiten Ende der Versteifungseinrichtung angebracht ist. Die Schwinge kann ein Ein- und Ausfahren der Versteifungseinrichtung in vertikaler Richtung ermöglichen und diese gleichzeitig gegen Kräfte in horizontaler Richtung abstützen. Die Schwinge weist beispielsweise eine Befestigung auf, die an dem Auflieger anbringbar ist, einen Arm, der gelenkig mit der Befestigung verbunden ist, sowie eine Gelenkverbindung, mit der der Arm mit dem zweiten Ende der Versteifungseinrichtung, insbesondere dem Abschlusselement, verbunden ist. Die Gelenkverbindungen können mittels Scharnieren implementiert werden, die nur um eine Achse drehbar sind, und die in den anderen Richtungen eine steife Verbindung bereitstellen. Somit wird das zweite Endes der Versteifungseinrichtung in horizontaler Richtung, insbesondere in Querrichtung, wirksam stabilisiert. Die Schwinge kann in Fahrtrichtung vor der Versteifungseinrichtung angeordnet sein. Ebenfalls ist es denkbar, zusätzlich oder alternativ eine Schwinge an einer oder beiden Seiten der Versteifungseinrichtung vorzusehen, oder zusätzlich/alternativ eine Schwinge vorzusehen, die hinter der Versteifungseinrichtung angeordnet ist. Andere Ausgestaltungen des Stabilisierungselements, z.B. als teleskopische Führungsschienen, sind ebenfalls denkbar.

Zusätzlich oder alternativ zur hinteren Versteifungseinrichtung kann die Traktionsvorrichtung auch eine vordere, beispielsweise als Niederzugeinrichtung ausgestaltete Versteifungseinrichtung umfassen, die vor der Kupplung angeordnet ist, und Auflieger und Zugmaschine zueinander zieht, wie in DE 20 2018 102 498 U1 beschrieben.

Gemäß einem weiteren Aspekt der vorliegenden Erfindung wird ein Auflieger bereitgestellt, der mittels einer Kupplung an eine Zugmaschine eines Sattelzugs koppelbar ist. Der Auflieger weist ein System zu Erhöhung der Traktion der Zugmaschine auf, das gemäß einer der hierin beschriebenen Ausführungsformen ausgestaltet ist. Die Traktionsvorrichtung, die erste Messeinrichtung, die zweite Messeinrichtung und die Steuereinrichtung können an dem Auflieger angebracht sein. Mit einem derartigen Auflieger können ähnliche wie die vorab beschriebenen Vorteile erzielt werden. Insbesondere kann der Auflieger mit Traktionsvorrichtung bereitgestellt werden, ohne dass wesentliche Veränderungen an der Zugmaschine notwendig sind. Das System kann also insoweit abgeschlossen sein. Das bedeutet jedoch nicht, dass nicht weitere Komponenten vorgesehen sein können, die an der Zugmaschine angebracht sind, wie z.B. die vorab genannte Konsole oder eine Eingabe-/Ausgabeeinheit, die im Führerhaus der Zugmaschine vorgesehen ist und mit der Steuereinrichtung kommuniziert, oder die separat vorgesehen sind, wie ein mobiles Endgerät, das zur Ausgabe von Informationen oder zum Empfangen von Steuersignalen mit der Steuereinrichtung kommuniziert.

Der Auflieger ist vorzugsweise ein Sattelauflieger mit Kippkasten bzw. Kippmulde.

Andere Ausgestaltungen sind ebenfalls denkbar, bei denen die Traktionsvorrichtung beispielsweise an der Zugmaschine vorgesehen ist. Dementsprechend wird auch eine Zugmaschine bereitgestellt, die ein System zur Erhöhung der Traktion in einer der hierin beschriebenen Ausgestaltungen aufweist. Die Konsole kann dann an dem Auflieger angebracht sein oder eine bereits vorhandene Fläche kann zur Abstützung benutzt werden.

Gemäß einer weiteren Ausführungsform der vorliegenden Erfindung wird Verfahren zur Steuerung einer der hierin beschriebenen Traktionsvorrichtungen bereitgestellt. Das Verfahren umfasst das Erfassen mindestens einer ersten Betriebsgröße der Traktionsvorrichtung mit einer ersten Messeinrichtung, das Erfassen mindestens einer zweiten Betriebsgröße der Traktionsvorrichtung oder des Sattelzugs mit einer zweiten Messeinrichtung, das Ermitteln eines Betriebszustandes der Traktionsvorrichtung und/oder des Sattelzuges basierend auf den erfassten Betriebsgrößen, und das Ansteuern der Traktionsvorrichtung basierend auf dem ermittelten Betriebszustand. Mit einem derartigen Verfahren können ähnliche wie die vorab beschriebenen Vorteile verwirklicht werden. Das Verfahren kann insbesondere mit einer Steuereinrichtung und einem System in einer der vorab beschriebenen Konfigurationen durchgeführt werden. Des Weiteren kann das Verfahren sämtliche der vorab mit Bezug auf die Steuereinrichtung und das System beschriebenen Schritte umfassen.

Bei einer Ausführungsform umfasst das Verfahren des Weiteren das Empfangen eines Eingabesignals zur Aktivierung der Traktionsvorrichtung; das Ermitteln, basierend auf den erfassten Betriebsgrößen, zumindest eines der folgenden Betriebszustände der Traktionsvorrichtung oder des Sattelzuges: Geschwindigkeit des Aufliegers, Knickwinkel zwischen Auflieger und Zugmaschine, Böschungswinkel zwischen Auflieger und Zugmaschine, Aktivierungszustand der Traktionsvorrichtung; und, wenn der ermittelte Betriebszustand der Traktionsvorrichtung oder des Sattelzuges einem vorbestimmten Zustand entspricht, das Ansteuern der Traktionsvorrichtung zur Aktivierung der Traktionsvorrichtung. Insbesondere kann das Verfahren das Blockieren der Aktivierung der Traktionsvorrichtung umfassen, wenn einer der ermittelten Betriebszustände nicht dem jeweiligen vorbestimmten Zustand entspricht, wenn beispielsweise eine entsprechende Betriebsgröße über einem vorbestimmten Grenzwert liegt oder ein vorbestimmter Aktivierungszustand nicht eingenommen ist. Zur Aktivierung kann die Traktionsvorrichtung so angesteuert werden, dass die Versteifungseinrichtung, insbesondere ein Balg, ausgefahren wird.

Das Verfahren kann bei aktivierter Traktionsvorrichtung des Weiteren umfassen: das Ermitteln, basierend auf den erfassten Betriebsgrößen, zumindest eines folgenden Betriebszustände der Traktionsvorrichtung oder des Sattelzuges: Geschwindigkeit des Aufliegers; Knickwinkel zwischen Auflieger und Zugmaschine; Böschungswinkel zwischen Auflieger und Zugmaschine; und, wenn der ermittelte Betriebszustand der Traktionsvorrichtung oder des Sattelzuges einem vorbestimmten Zustand nicht entspricht, das Ansteuern der Traktionsvorrichtung zur Deaktivierung der Traktionsvorrichtung. Der vorbestimmte Zustand kann wiederum dann vorliegen, wenn entsprechende Betriebsgrößen innerhalb vorbestimmter Grenzwerte liegen, beispielsweise ein maximaler Knickwinkel oder ein maximaler Böschungswinkel nicht überschritten ist. Durch das Deaktivieren der Traktionsvorrichtung kann die Betriebssicherheit des Sattelzugs sichergestellt und Beschädigungen vermieden werden.

Das Deaktivieren der Traktionsvorrichtung kann das Aktivieren einer Rückzugeinrichtung umfassen, wodurch die Versteifungseinrichtung schnell in ihre eingefahrene Stellung gebracht werden kann.

Das Verfahren kann des Weiteren das Kombinieren verschiedener erfasster Betriebsgrößen oder ermittelter Betriebszustände umfassen, um eine Plausibilisierung der erfassten Betriebsgrößen vorzunehmen, Fehler zu detektieren, und/oder um den Betriebszustand der Traktionsvorrichtung oder des Sattelzug möglichst genau festzustellen.

Selbstverständlich können die Merkmale der vorab beschriebenen Ausführungsformen und Aspekte der vorliegenden Erfindung miteinander kombiniert werden. Das System, insbesondere die Steuereinrichtung, kann zur Durchführung sämtlicher Ausführungsformen des Verfahrens ausgestaltet sein.

### Kurze Beschreibung der Zeichnungen

Die Erfindung wird nachfolgend unter Bezugnahme auf die beiliegenden Zeichnungen näher erläutert. In den Zeichnungen kennzeichnen gleiche Bezugszeichen gleiche oder ähnliche Elemente.
- Fig. 1: ist eine schematische Zeichnung, die einen Sattelzug mit einem System gemäß einer Ausführungsform der vorliegenden Erfindung zeigt.
- Fig. 2: ist eine schematische Zeichnung, die ein System mit einer Traktionsvorrichtung gemäß einer Ausführungsform der vorliegenden Erfindung zeigt.
- Fig. 3: ist eine schematische Zeichnung, die ein System mit einer angetriebenen Rückzugseinrichtung gemäß einer Ausführungsform der vorliegenden Erfindung zeigt.
- Fig. 4: ist eine schematische Zeichnung, die ein System mit einer Traktionsvorrichtung gemäß einer Ausführungsform der vorliegenden Erfindung zeigt, wobei die Traktionsvorrichtung eine Schwenkeinrichtung aufweist.
- Fig. 5: ist eine schematische Zeichnung, die ein System mit einer Traktionsvorrichtung gemäß einer weiteren Ausführungsform der vorliegenden Erfindung zeigt.
- Fig. 6: ist eine schematische Zeichnung, die eine Steuereinrichtung gemäß einer Ausführungsform der vorliegenden Erfindung zeigt.
- Fig. 7: ist eine schematische Zeichnung, die den Knickwinkel zwischen Zugmaschine und Auflieger bei Kurvenfahrt schematisch darstellt.
- Fig. 8: ist ein Flussdiagramm, das ein Verfahren gemäß einer Ausführungsform der vorliegenden Erfindung darstellt.
- Fig. 9: ist ein Flussdiagramm, das ein Verfahren gemäß einer Ausführungsform der vorliegenden Erfindung darstellt.

### Beschreibung beispielhafter Ausführungsformen

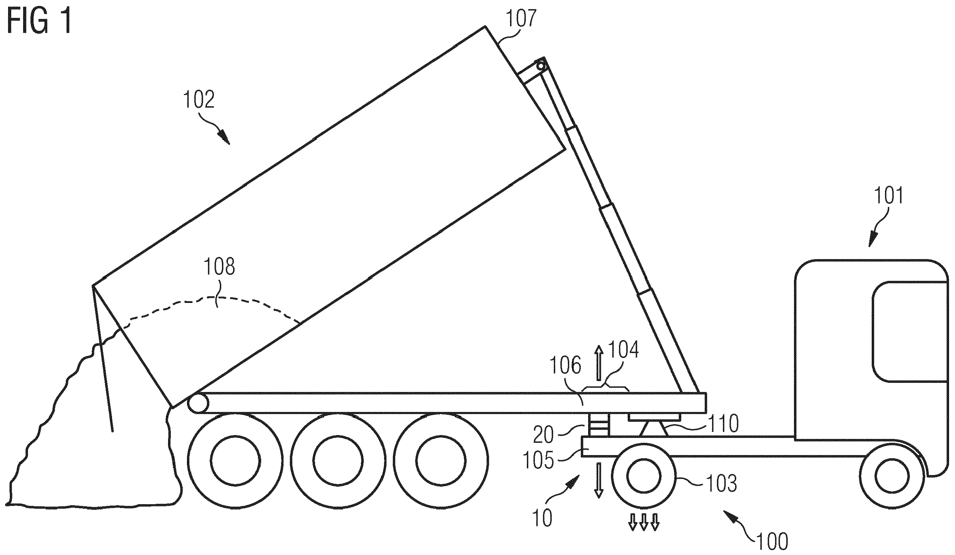

Fig. 1 zeigt ein Systems 100 gemäß einer Ausführungsform der Erfindung, das eine an dem Auflieger 102 montierte Traktionsvorrichtung 10 aufweist. Zugmaschine 101 und Auflieger 102 sind mittels der Kupplung 110, insbesondere einer Sattelkupplung, gekoppelt und bilden einen Sattelzug bzw. ein Gespann. Der Auflieger 102 weist eine Kippmulde 107 auf, die wie dargestellt kippbar ist, um Schüttgut zu entleeren. Dabei bleibt regelmäßig eine Restmenge 108 in der Kippmulde 107 zurück. Da diese Restmenge 108 des Schüttguts auf dem hinteren Teil des Aufliegers 102 lastet, wird der vordere Teil des Aufliegers 102 entlastet, so dass nur noch eine deutlich reduzierte Kraft über die Sattelkupplung 110 auf den hinteren Bereich der Zugmaschine 101 aufgebracht wird. Da sich in diesem hinteren Bereich der Zugmaschine 101 die angetriebenen Räder 103 befinden, verliert die Zugmaschine 101 deutlich an Traktion. Die verbleibende Traktion ist bei herkömmlichen Zugmaschinen nicht mehr ausreichend, um das Gespann zum Entladen der Restmenge 108 an Schüttgut vorwärts zu bewegen.

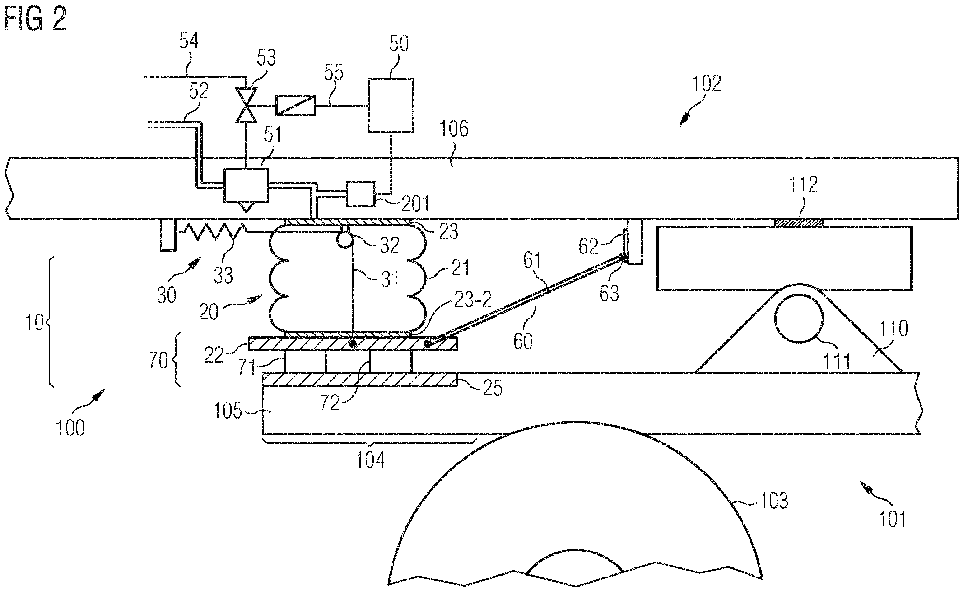

Die Sattelkupplung 110 weist in der Regel eine Lagerung auf, die in Fig. 2 mit Bezugszeichen 111 schematisch dargestellt ist. Auflieger 102 und Zugmaschine 101 sind somit nicht starr verbunden, sondern es ist eine Kippbewegung des Aufliegers relativ zur Zugmaschine möglich, wobei die Bewegung um die Achse des Lagers 111 erfolgt. Der Winkel, um den der Auflieger 102 gegenüber der Zugmaschine 101 um Achse 111 verkippt ist, wird hierin Böschungswinkel genannt. Aufgrund dieser flexiblen Verbindung führt eine Entlastung des vorderen Bereichs des Aufliegers 102 auch unmittelbar zu einer Entlastung der Zugmaschine im Bereich der angetriebenen Räder 103 und somit zur verringerten Traktion. Es kann insbesondere zu einem leichten Anheben des hinteren Bereichs der Zugmaschine 101 kommen.

Die Traktionsvorrichtung 10 weist eine Versteifungseinrichtung 20 auf, die dieser Kippbewegung um die Sattelkupplung 110 entgegenwirkt, die insbesondere verhindert, dass sich der Rahmen 105 der Zugmaschine 101 dem Bodenteil oder Rahmen 106 des Aufliegers 102 in dem Bereich 104 hinter der Sattelkupplung 110 annähert. Die Verbindung zwischen Auflieger 102 und Zugmaschine 101 wird auf diese Art und Weise versteift bzw. starr gemacht, wodurch die Verringerung der Traktion vermieden werden kann. Die Versteifungseinrichtung 20 übt im hinteren Bereich 104 der Zugmaschine 101 eine Kraft aus, die die Rahmen von Auflieger und Zugmaschine auseinanderdrückt, so dass eine höhere Anpresskraft auf die angetriebenen Räder 103 wirkt, wie in Fig. 1 durch Pfeile angedeutet. Die Traktion wird somit verbessert.

Die Versteifungseinrichtung 20 kann ausgedehnt oder ausgefahren werden, um die Kraft auf den hinteren Bereich 104 der Zugmaschine 101 aufzubringen, wie in Fig. 1 ebenfalls durch entsprechende Pfeile angedeutet. Die Versteifungseinrichtung 20 ist vorzugsweise an dem Bodenteil, beispielsweise einem Rahmen 106 oder einer Bodenplatte des Aufliegers 102, montiert und stützt sich an diesem ab. Sie kann alternativ am Rahmen 105 der Zugmaschine 101 montiert sein.

Fig. 2 zeigt schematisch eine Ausführungsform der Traktionsvorrichtung 10 der Fig. 1, bei der die Versteifungseinrichtung 20 ein ausfahrbares Element in Form eines Balgs 21 aufweist. Die Versteifungseinrichtung 20 ist in einer ausgefahrenen Stellung dargestellt, in der der Balg 21 ausgedehnt ist und über ein Abschlusselement 22 eine Kraft auf einen hinteren Bereich der Zugmaschine 101 aufbringt. Der Balg 21 kann beispielsweise zwei Endplatten haben, wobei eine Endplatte 23 an einem Bodenteil des Aufliegers 102 angebracht ist, insbesondere an dem Rahmen 106. Die zweite Endplatte 23-2 kann separat oder Teil des Abschlusselements 22 sein, das als Pfanne ausgestaltet sein kann (nicht dargestellt). Das Abschlusselement 22 wirkt mit einer Konsole 25 zusammen, die in dem hinteren Bereich am Rahmen 105 der Zugmaschine 101 montiert ist. Wird der Balg 21 mit Druckluft beaufschlagt, so schränkt er eine Kippbewegung des Aufliegers 102 relativ zur Zugmaschine 101 um das Lager 111 ein und bringt im hinteren Bereich 104 eine Kraft auf die Konsole 25 auf, wodurch wie vorab beschrieben eine verbesserte Traktion erzielt wird. In der Ausführungsform der Figur 2 sind nachfolgend beschriebene Gleitelemente 71, 72 vorgesehen, über die Kraft aufgebracht wird. Bei anderen Ausführungsformen kann die Kraft auch direkt von Abschlusselement 22 auf die Konsole 25 aufgebracht werden.

Das Ausfahren der Versteifungseinrichtung 20 und insbesondere das Einbringen von Druckluft in den Balg 21 kann mittels einer Steuereinrichtung 50 gesteuert werden. Bei der Ausführungsform der Fig. 2 umfasst das System 100 ein Relaisventil 51, über das Druckluft von einem Arbeitskreis eines Druckluftsystems des Aufliegers 102 oder der Zugmaschine 101 über Leitung 52 dem Balg 21 zuführbar ist. Über das Relaisventil 51 kann gleichermaßen Luft aus dem Balg 21 entlassen werden, wenn die Versteifungseinrichtung 20 eingefahren werden soll. Relaisventil 51 wird mit Druckluft aus dem Druckluftsystem des Aufliegers 102 bzw. der Zugmaschine 101 mittels Leitung 54 und Magnetventil 53 gesteuert. Magnetventil 53 wird von Steuereinrichtung 50 über eine Steuerleitung 55 elektrisch angesteuert. Um entsprechende Kräfte ausüben zu können, muss der Balg 21 eine entsprechende Größe und ein entsprechendes Volumen aufweisen. Da der Balg jedoch über den Arbeitskreis des Druckluftsystems des Aufliegers 102 mit Druckluft versorgt wird, können das Aufblasen des Balgs 21 und damit das Ausfahren der Versteifungseinrichtung 20 in relativ kurzer Zeit erfolgen.

Der Balg 21 kann beispielsweise ein Balg sein, wie er üblicherweise für Luftfederungen zum Einsatz kommt. Vorzugsweise weist der Balg 1, 2, 3 oder mehr Falten bzw. Einschnürungen auf. Der Balg kann aus mehreren Lagen von Gummi und Gewebe hergestellt sein, beispielsweise aus mehrlagigem Naturkautschuk.

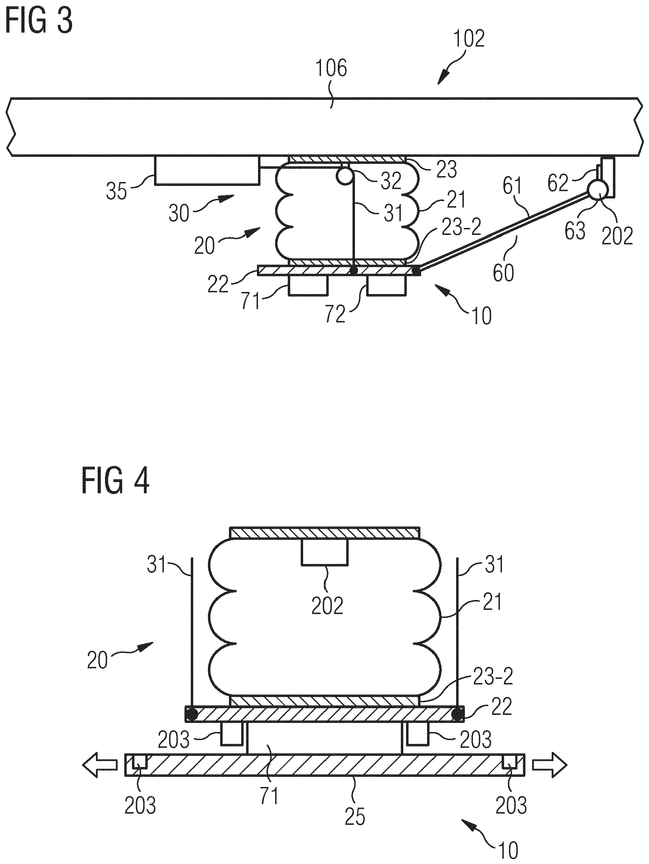

Die Vorrichtung 10 weist des Weiteren eine Rückzugseinrichtung 30 auf, mit der die Versteifungseinrichtung 20 in einen eingefahrenen Zustand bzw. einen Schlafzustand oder Ruhezustand gebracht werden kann. Die Rückzugseinrichtung umfasst einen Umlenkmechanismus. Dieser kann ein Zugseil 31 sowie eine Umlenkrolle 32 aufweisen. Das Zugseil 31 ist mit dem Abschlusselement 22, beispielsweise der vorab genannten Pfanne oder Platte, an einem Ende verbunden. Am anderen Ende des Zugseils 31 ist eine Feder 33 vorgesehen, die im ausgefahrenen Zustand der Versteifungseinrichtung 20 gespannt ist. Zum Einfahren der Versteifungseinrichtung 20 wird mittels des Relaisventils 51 die Luft aus dem Balg 21 entlassen. Die gespannte Zugfeder 33 zieht nunmehr mittels Zugseil 31 und Umlenkrolle 32 das Abschlusselement 22 nach oben, wodurch die Versteifungseinrichtung 20 ihren eingefahrenen Zustand erreicht. Ein entsprechender Mechanismus ist ebenfalls an der nicht dargestellten gegenüberliegenden Seite des Balgs 21 vorgesehen (siehe Figur 4).

Wie in Figur 3 dargestellt ist es vorteilhaft, wenn die Rückzugseinrichtung 30 einen angetriebenen Aktuator 35 aufweist, durch dessen Betätigung die Versteifungseinrichtung 20 von der in Figuren 2 und 3 gezeigten ausgefahrenen Stellung in eine eingefahrene Stellung bringbar ist. Mit einem solchen Aktuator 35 ist ein schnelles und sicheres Einfahren der Versteifungseinrichtung 20 möglich. Insbesondere können durch ein schnelles Einfahren Gefahrensituationen und ggf. Schaden an Sattelzug und Traktionsvorrichtung 10 vermieden werden. Der Aktuator 35 kann mittels des Umlenkmechanismus auf die Versteifungseinrichtung 20 wirken, was den Vorteil hat, dass der Aktuator 35 z. B. in einem Rahmen der Zugmaschine angeordnet werden kann. Der angetriebene Aktuator kann z. B. als hydraulischer oder pneumatischer Zylinder ausgestaltet sein, der die Zugseile 31 einzieht. Er kann auch als elektrischer Aktuator ausgestaltet sein, beispielsweise als Winde mit einem Elektromotor, die die Zugseile 31 einzieht. Bei anderen Ausführungsformen wirkt der Aktuator 35 direkt auf das Abschlusselement 22.

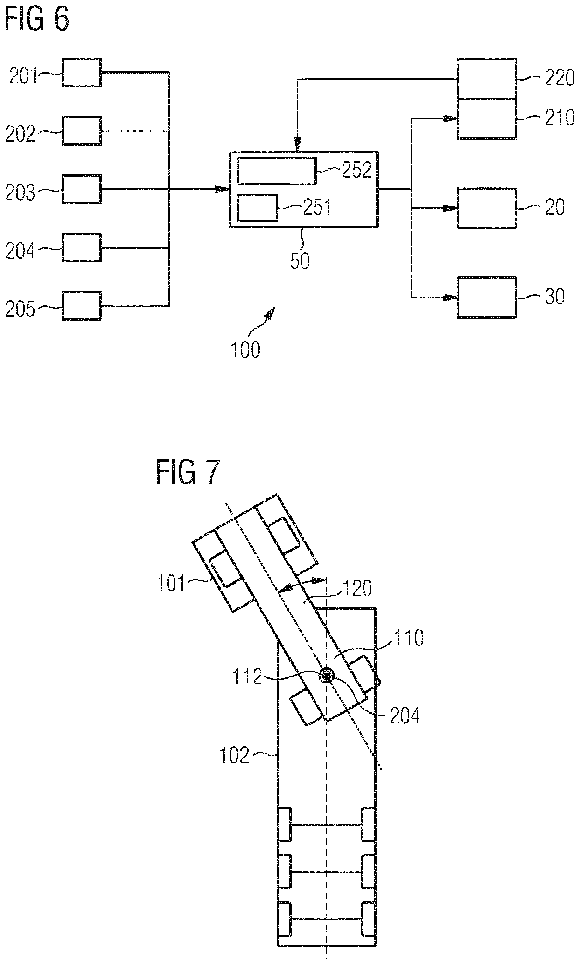

Bei der Ausgestaltung der Figur 2 ermöglicht die Traktionsvorrichtung 10 auch bei ausgefahrener Versteifungseinrichtung 20 Kurvenfahrten. Bei einer Kurvenfahrt erfolgt eine Verschwenkung des Aufliegers 102 relativ zur Zugmaschine 101, insbesondere um den Königszapfen 112 der Sattelkupplung 110. Figur 7 zeigt die Längsachsen der Zugmaschine und des Aufliegers, zwischen denen bei Kurvenfahrt der Knickwinkel 120 auftritt. Es ist ersichtlich, dass eine entsprechende Verschwenkung der an dem Auflieger 102 montierten Versteifungseinrichtung 20 relativ zu der an der Zugmaschine 101 montierten Konsole 25 auftritt.

Damit die Versteifungseinrichtung 20 auch bei einer solchen Kurvenfahrt eine Kraft ausüben kann, ist eine Schwenkeinrichtung 70 vorgesehen. Bei der Ausführungsform der Figur 2 weist die Schwenkeinrichtung 70 Gleitelemente 71 und 72 auf, die an dem Abschlusselement 22 montiert sind, beispielsweise an einer Abschlusspfanne oder Abschlussplatte. In der in Figur 2 dargestellten ausgefahrenen Stellung des Balgs 21 kontaktieren die Gleitelemente 71, 72 die Konsole 25 und übertragen die vom Balg 21 ausgeübte Kraft auf diese. Die Konsole 25 kann mit einer Gleitfläche versehen sein, auf der die Gleitelemente 71, 72 gleiten können. Die Gleitfläche kann eine ebene Fläche sein, die lackiert ist oder mit einer besonderen Beschichtung versehen ist, die das Gleiten erleichtert (z.B. Teflon oder ähnliches).

In Figur 2 erfolgt das Gleiten im Wesentlichen senkrecht zur Zeichenebene. Da der Auflieger 102 bei einem Verschwenken eine Drehbewegung um den Königszapfen 112 ausführt, gleiten die Gleitelemente 71, 72 dementsprechend auf einem kreissegmentförmigen Pfad um den Königszapfen.

In dem Beispiel der Figur 2 sind zwei Gleitelemente 71, 72 vorgesehen. Diese haben eine quaderförmige Form und sind in Fahrtrichtung hintereinander angeordnet. In Querrichtung (senkrecht zur Zeichenebene) weisen sie ein ähnliche oder dieselbe Länge auf. Die Länge erstreckt sich vorzugsweise über mindestens 50% der Ausdehnung des ausfahrbaren Elements in diese Richtung, vorzugsweise über mindestens 75% dieser Ausdehnung. Selbstverständlich sind auch andere Ausgestaltungen denkbar, wie die Verwendung nur eines Gleitelements oder von drei oder mehr Gleitelementen. Auch kann die Form der Gleitelemente variiert werden. Die Gleitelemente können beispielsweise eine Höhe zwischen 0,5 und 10 cm aufweisen. Die Gleitelemente sind derart angeordnet, dass eine effektive Kraftübertragung zwischen der Versteifungseinrichtung 20 (Balg 21) und der Konsole 25 sichergestellt ist, insbesondere ohne ein Verkippen zwischen dem Abschlusselement 22 und der Konsole 25.

Figur 4 zeigt eine Rückansicht eines Teils der Traktionsvorrichtung 10 der Figur 2. Das Verschwenken der Konsole 25 relativ zur Versteifungseinrichtung 20 ist durch Pfeile angedeutet. Die Gleitelemente 71, 72 sind an dem Abschlusselement 22 montiert (beispielsweise mittels innenliegender Schrauben) und bewegen sich somit gemeinsam mit der Versteifungseinrichtung 20, die an dem Auflieger 102 angebracht ist. Die Gleitelemente 71, 72 können aus Kunststoff gefertigt sein. Insbesondere bietet sich ein Kunststoff mit guten Gleiteigenschaften an, der imstande ist, entsprechende Drücke zu übertragen. Beispiele sind Polyamid (PA) bzw. Nylon. Andere Kunststoffe, wie Polyoxymethylen, Polycarbonat, Polyetheretherketon (PEEK) oder ähnliche können ebenfalls verwendet werden. Der Kunststoff kann faserverstärkt sein. In Figur 4 sind ebenfalls die seitlich an dem Abschlusselement 22 montierten Zugseile 31 sichtbar.

Die Verwendung der Gleitelemente 71, 72 in der Schwenkeinrichtung 70 hat den besonderen Vorteil, dass der Aufbau einfach und unkompliziert ist und dass die Versteifungseinrichtung 20 auch ausgefahren werden kann, wenn der Auflieger 102 und die Zugmaschine 101 bereits gegeneinander verschwenkt sind. Andere Ausgestaltungen sind denkbar. Ein oder mehrere Gleitelemente 71, 72 können an der Konsole 25 montiert sein. Statt Gleitelementen können Rollen zum Einsatz kommen, die an der Versteifungseinrichtung 20 oder der Konsole 25 angebracht sind. Diese können so ausgerichtet sein, dass ein Abrollen auf einem Kreissegment um den Königszapfen 112 ermöglicht wird. Andere mögliche Ausgestaltungen sind die Verwendung einer Schiene und eines darauf gleitenden Schlittens.

Wieder zurückkommend auf Figur 2 weist die Traktionsvorrichtung 10 des Weiteren ein Stabilisierungselement 60 zur Stabilisierung der Versteifungseinrichtung 20 auf, das als Schwinge ausgebildet ist. Die Schwinge weist einen Arm 61 auf, der mit dem Abschlusselement 22, insbesondere der vorab beschriebenen Pfanne, gelenkig verbunden ist. Die Verbindung kann durch ein Scharnier oder Bolzen bereitgestellt werden, so dass eine Relativbewegung zwischen Abschlusselement 22 und Arm 61 nur um eine Achse senkrecht zur Zeichenebene möglich ist. Am anderen Ende ist der Arm 61 über ein weiteres Gelenk 63, insbesondere ein Scharnier, mit einem Montageelement 62 verbunden, das an dem Auflieger 102 angebracht ist. Beispielsweise ist eine Querstrebe an den seitlichen Trägern des Rahmens vorgesehen, an der das Montagelement 62 angebracht ist. Die Breite des Arms 61 ist so gewählt, dass eine ausreichende Stabilisierung erreicht wird. Der Arm 61 kann einstückig aus Stahl gefertigt sein, beispielsweise als Hutprofil, C-Profil, U-Profil oder T-Profil, es können jedoch auch zwei Arme vorgesehen sein. Diese können durch Querstreben miteinander verbunden sein.

Die gelenkigen Verbindungen der Schwinge erlauben das Einfahren und Ausfahren der Versteifungseinrichtung 20 und nehmen Querkräfte auf, also Kräfte, die in einer im Wesentlichen horizontalen Ebene wirken. Die Versteifungseinrichtung 20 und insbesondere der Balg 21 werden dadurch stabilisiert. Gerade bei Verwendung der Gleitelemente 71, 72 wirken bei Kurvenfahrt Kräfte quer zur Fahrtrichtung auf das Ende des Balgs 21, die mit dem Stabilisierungselement 60 kompensiert werden können. Es sollte klar sein, dass das Stabilisierungselement 60 optional ist. Beispielsweise kann bei Verwendung eines pneumatischen Zylinders anstelle des Balgs 21 der Zylinder selbst entsprechende Querkräfte aufnehmen.

Die Endplatten des Balgs, das Abschusselement, das bewegliche Element, die Zugseile der Einzugeinrichtung sowie die Konsole können aus Stahl gefertigt sein.

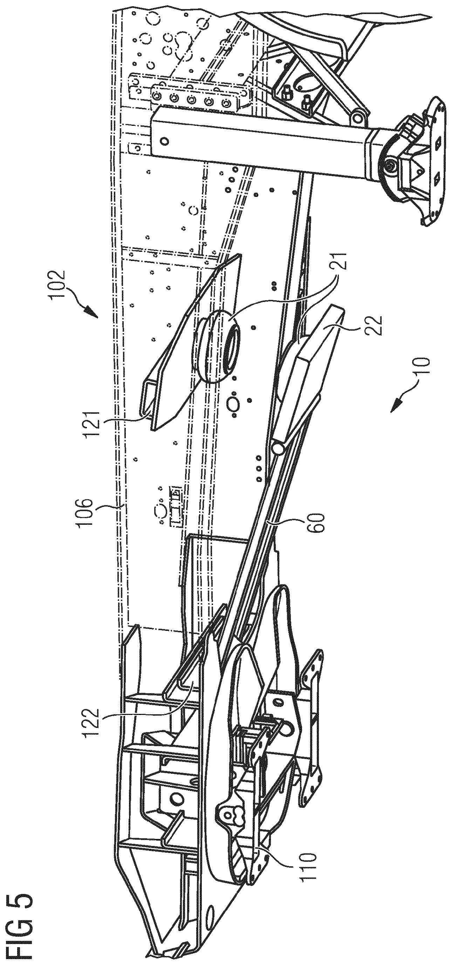

Figur 5 zeigt eine spezifische Implementierung der Traktionsvorrichtung 10 in einem Auflieger 102, insbesondere einem Kippauflieger. Obige Ausführungen gelten dementsprechend sinngemäß für die Ausführungsform der Figur 5. Der Rahmen 106 des Aufliegers 102 weist eine erste Querstrebe 121 auf, an der eine Platte montiert ist, an der ein Ende der Versteifungseinrichtung 20, insbesondere eines Balgs 21 angebracht ist. Das andere Ende des Balgs 21 ist an dem Abschlusselement 22 angebracht. In Figur 5 sind nur das obere und untere Ende des Balgs 21 dargestellt. Das Abschlusselement 22 ist gelenkig mit dem Stabilisierungselement 60 in Form einer Schwinge verbunden. Das andere Ende der Schwinge ist gelenkig mit einer zweiten Querstrebe 122 verbunden, die wiederum zwischen den Seitenträgern des Rahmens 106 angebracht ist. Mit einer derartigen Ausgestaltung kann bei einer eingefahrenen Stellung der Versteifungseinrichtung 20 die Schwinge 60 mit dem Abschlusselement 22 nahezu vollständig zwischen den Seitenträgern des Rahmens 106 versenkt werden. Somit behindert die Traktionsvorrichtung 10 das An- oder Abkoppeln des Aufliegers 102 nicht.

Es sollte klar sein, dass bei den vorab beschriebenen Ausführungsformen der Balg 21 lediglich eine Implementierung der Versteifungseinrichtung 20 darstellt. Statt des Balgs können beispielsweise eine Blase oder ein hydraulischer bzw. pneumatischer Zylinder vorgesehen sein. Diese können auf gleiche Art und Weise durch Anschluss an ein pneumatisches bzw. hydraulisches System ausgefahren werden. Es können mehrere Bälge oder Zylinder vorgesehen sein. Auch ist es möglich, die Versteifungseinrichtung 20 an der Zugmaschine 101 anzubringen und stattdessen die Konsole 25 am Auflieger 102 vorzusehen. Der Balg 21 kann dann direkt an das Drucksystem der Zugmaschine 101 angeschlossen werden. Die in Figuren 2-5 dargestellte Ausführungsform ist jedoch vorteilhaft, da die Traktionsvorrichtung 10 sonst einen Kupplungsvorgang zwischen Auflieger 102 und Zugmaschine 101 behindern kann. Außerdem sind bei einer derartigen Ausgestaltung bis auf die Montage der Konsole 25 keine Modifikationen an der Zugmaschine nötig.

Das System 100 umfasst die Traktionsvorrichtung 10 mit der Versteifungseinrichtung 20 und optional die Einfahreinrichtung 30, die Schwenkeinrichtung 70, und das Stabilisierungselement 60. Die Konsole 25 kann als Teil des Systems 100 oder separat bereitgestellt werden.

System 100 umfasst ferner die Steuereinrichtung 50, die die Traktionsvorrichtung 10 steuert und die Versteifungseinrichtung von dem eingefahrenen Zustand in den ausgefahrenen Zustand bringen kann. Figur 6 zeigt eine Ausführungsform der Steuereinrichtung 50. Das System 100 umfasst des Weiteren mindestens zwei Messeinrichtungen, wobei mit einer der Messeinrichtungen eine Betriebsgröße der Traktionsvorrichtung 10 erfasst wird, und mit einer weiteren Messvorrichtung eine Betriebsgröße der Traktionsvorrichtung 10 oder des Sattelzuges erfasst wird.

Als Messeinrichtung kann ein Kraftbeaufschlagungssensor 201 bereitgestellt werden, der eine Größe misst, die abhängig ist von der Kraftbeaufschlagung der Versteifungseinrichtung 20. Vorzugsweise ist dieser als Drucksensor implementiert, der einen Druck misst, mit dem der Balg 21 beaufschlagt wird. Wie in Figur 2 dargestellt kann der Drucksensor mit einer Zuführleitung verbunden sein, über die dem Balg 21 Druckluft zugeführt wird, oder der Drucksensor kann auch in dem Balg oder einer anderen geeigneten Stelle vorgesehen sein. Mit dem Kraftbeaufschlagungssensor 201 kann überwacht werden, ob bei einer Ansteuerung der Versteifungseinrichtung 20 dem Balg auch entsprechend Druckluft zugeführt wird. Weiterhin kann über den Kraftbeaufschlagungssensor 201 festgestellt werden, ob die Traktionsvorrichtung 10 aktiviert ist oder nicht (bei deaktivierter Traktionsvorrichtung sollte der Druck im entlüfteten Balg nahe dem Umgebungsdruck sein). Weiterhin ist es möglich, mittels des Kraftbeaufschlagungssensors 201 festzustellen, wenn ein vorbestimmter Böschungswinkel (Grenzwert) überschritten wird. Bei Fahrt über eine Kuppe wirkt aufgrund der Verschwenkung zwischen Auflieger und Zugmaschine um die Achse 111 der Kupplung 110 eine zusätzliche Last auf die Versteifungseinrichtung 20. Der damit verbundene Druckanstieg kann mit dem Drucksensor detektiert werden. Bei Verwendung eines hydraulischen oder pneumatischen Zylinders können ähnliche Kraftbeaufschlagungssensorsen 201 zum Einsatz kommen.

Als weitere Messeinrichtung ist ein Wegsensor 202 vorgesehen. Der Wegsensor 202 misst, in welcher Stellung sich die Versteifungseinrichtung 20 befindet. Der Wegsensor 202 kann als einfacher Taster ausgestaltet sein, der bei einer bestimmten Distanz, die die Versteifungseinrichtung von der eingefahrenen Stellung zurückgelegt hat, ein Signal ausgibt. Vorzugsweise misst der Wegsensor die Position der Versteifungseinrichtung kontinuierlich und/oder stufenlos. Insbesondere kann der Wegsensor 202 die Distanz angeben, über die sich die zweite Endplatte 23-2 von der ersten Endplatte 23 beim Ausfahren des Balgs 21 entfernt hat. Der Wegsensor 202 kann dafür einen Seilzugsensor oder ein Linearpotentiometer aufweisen, oder als optischer Abstandssensor implementiert werden. Auch ist es möglich, den Wegsensor 202 als Winkelsensor zu implementieren, der die Bewegung der Schwinge um das Gelenk 63 erfasst (siehe Figur 3), z. B. als Potentiometergeber oder anderer Winkelsensor. Bevorzugt ist eine Implementierung als Ultraschall-Abstandssensor, wie in Figur 4 dargestellt. Mit dem Wegsensor 202 lässt sich ebenfalls feststellen, ob die Traktionsvorrichtung 10 aktiviert ist, d.h. ob die Versteifungseinrichtung 20 ausgefahren ist. Weiterhin kann mit dem Wegsensor 202 eine Änderung des Böschungswinkels festgestellt werden, da sich mit diesem der Abstand zwischen den Endplatten des Balgs 21 entsprechend ändert.

Mit dem Kraftbeaufschlagungssensors 201 und dem Wegsensor 202 lassen sich von der Steuereinrichtung 50 somit jeweils die Betriebszustände "Traktionsvorrichtung aktiviert", "Traktionsvorrichtung deaktiviert", "Böschungswinkel innerhalb Grenzwert", und "Böschungswinkel oberhalb Grenzwert" feststellen.

Eine weitere Messeinrichtung, die vorzugsweise vorgesehen ist, ist der Endlagensensor 203. Dieser ist ausgestaltet, um zu detektieren, wenn bei einer Verschenkung zwischen Versteifungseinrichtung 20 und Konsole 25 das Ende der Konsole 25 erreicht wird. Ein weiteres Verschwenken kann dazu führen, dass die Versteifungseinrichtung 20 von der Konsole 25 abgleitet. Beispielsweise ist ein Endlagensensor 203 auf jeder Seite des Abschlusselements 22 in der Richtung vorgesehen, in der das Verschwenken bei Kurvenfahrt erfolgt, wie in Figur 4 dargestellt. Die Endlagensensoren 203 können am Abschlusselement 22 angebracht oder in dieses integriert sein. Alternativ können die Endlagensensoren 203 auch an der Konsole 25 angebracht oder in diese integriert sein. Bei einer einfachen Ausgestaltung sind die Endlagensensoren 203 als Drucksensoren oder Taster implementiert, die mechanisch detektieren, wenn das entsprechende Sensorelement die Konsole 25 verlässt (d.h. abgleitet) oder wenn das Gleitelement 71 über das Sensorelement gleitet. Die Sensorelemente können entsprechende Rollen aufweisen, die auf der Konsole 25 abrollen. Die Sensorelemente können durch Druck aktiviert werden, wenn die Versteifungseinrichtung 20 die Konsole 25 kontaktiert, und können deaktiviert werden, wenn das jeweilige Sensorelement von der Konsole abgleitet.

Vorzugsweise sind die Endlagensensoren 203 als elektrische Sensoren ausgestaltet, die an der Versteifungseinrichtung 20 angebracht sind und induktiv oder kapazitiv das Ende der Konsole 25 detektieren. Derartige Sensoren sind aus dem Stand der Technik bekannt und darum hier nicht näher beschrieben. Figur 4 veranschaulicht beispielhaft Endlagensensoren 203 in der Konsole 25 und an dem Abschlusselement 22. Vorzugsweise ist jedoch nur ein Sensorelement auf jeder Seite der Versteifungseinrichtung 20 an dem Abschlusselement 22 in der Richtung vorgesehen, in der das relative Verschwenken stattfindet.

Mit dem Endlagensensor 203 lässt sich durch die Steuereinrichtung 50 feststellen, ob die Verschwenkung zwischen Versteifungseinrichtung 20 und Konsole 25 innerhalb eines vorbestimmten Grenzwertes bleibt.

Als weitere Messeinrichtung ist eine Knickwinkelmesseinrichtung 204 vorgesehen, die den Knickwinkel 120 zwischen Zugmaschine und Auflieger bestimmt (siehe Figur 7). Die Knickwinkelmesseinrichtung 204 kann als Knickwinkelsensor ausgestaltet sein, wie dies in Figur 7 angedeutet ist. Es kann beispielsweise ein Winkelgeber vorgesehen sein, der die Drehung der Zugmaschine um den Königszapfen 112 misst, beispielsweise ein Potentiometergeber, Drehgeber oder anderer Winkelsensor. Bei einer bevorzugten Ausgestaltung ist die Knickwinkelmesseinrichtung 204 dadurch implementiert, dass der Knickwinkel aus den unterschiedlichen Drehzahlen der Räder des Aufliegers und/oder der Zugmaschine bestimmt wird. Diese sind dadurch bedingt, dass die Räder bei Kurvenfahrt unterschiedliche Wegstrecken zurückgelegen. Insbesondere kann eine Knickwinkelmesseinrichtung vorgesehen sein, wie sie in der Druckschrift EP 2 781 378 B1 beschrieben ist. Die Steuereinrichtung 50 kann beispielsweise ausgestaltet sein, um entsprechende Drehzahlsignale von den Rädern zu erhalten und daraus den Knickwinkel zu bestimmen, gemäß einem der in EP 2 781 378 B1 beschriebenen Verfahren.

Mit der Knickwinkelmesseinrichtung 204 lässt sich somit ein Betriebszustand des Sattelzuges bestimmen. Da die Verschwenkung der Versteifungseinrichtung 20 relativ zur Konsole 25 abhängig ist von dem Knickwinkel 120, kann über die Bestimmung des Knickwinkels gleichermaßen festgestellt werden, ob diese Verschwenkung innerhalb eines vorbestimmten Grenzwertes bleibt.

Mit dem Endlagensensor 203 und der Knickwinkelmesseinrichtung 204 lassen sich somit jeweils die Betriebszustände "Verschwenkung innerhalb Grenzwert", und "Verschwenkung außerhalb Grenzwert" von der Steuereinrichtung 50 ermitteln.

Das System 100 weist des Weiteren die Geschwindigkeitsmesseinrichtung 205 auf, die die Geschwindigkeit des Aufliegers 102 als einen Betriebszustand des Sattelzuges erfasst. Die Geschwindigkeitsmesseinrichtung 205 kann als Geschwindigkeitssensor implementiert werden, der an dem Auflieger 102 angebracht ist. Vorzugsweise ist die Geschwindigkeitsmesseinrichtung 205 ein bereits an dem Auflieger 102 vorhandenes System, das die Geschwindigkeit misst. Beispiele sind ein Bremssystem des Aufliegers oder ein Liftachsensystem, das jeweils die Geschwindigkeit des Aufliegers als Steuergröße verwendet. Die Geschwindigkeitsmesseinrichtung 205 kann so implementiert werden, dass ein Geschwindigkeitssignal eines solchen vorhandenen Systems der Steuereinrichtung 50 zugeführt wird, z. B. über eine drahtgebundene oder drahtlose Verbindung. Steuereinrichtung 50 kann mit einem CAN-Bus oder einer anderen Datenleitung verbunden sein, auf der ein entsprechendes Geschwindigkeitssignal bereitgestellt wird.

Unter Verwendung des Messsignals von der Geschwindigkeitsmesseinrichtung 205 kann die Steuereinrichtung 50 somit die Betriebszustände "Geschwindigkeit unterhalb Grenzwert" und "Geschwindigkeit oberhalb Grenzwert" ermitteln.

Steuereinrichtung 50 ist nun ausgestaltet, um basierend auf den Messsignalen der Messeinrichtungen 201-205 einen Betriebszustand der Traktionsvorrichtung 10 oder des Sattelzuges zu bestimmen und die Traktionsvorrichtung 10 basierend auf dem ermittelten Betriebszustand anzusteuern.

Mittels des Kraftbeaufschlagungssensors 201 oder des Wegsensors 202 lässt sich bestimmen, ob der Böschungswinkel zu groß ist und damit eine zu hohe Belastung der Versteifungseinrichtung erfolgt. Erreicht der Böschungswinkel einen vorbestimmten Grenzwert, so steuert die Steuerungseinheit 50 die Traktionsvorrichtung derart, dass der Druck in der Versteifungseinrichtung 20, insbesondere dem Balg 21, reduziert wird und/oder die Versteifungseinrichtung 20 eingefahren wird, d.h. die Traktionsvorrichtung 10 deaktiviert wird. Das Erreichen des Grenzwertes kann durch Erreichen eines vorbestimmten Druckes oder das Erreichen einer vorbestimmten Position (wie weit ausgefahren) der Versteifungseinrichtung ermittelt werden. Bei Vorhandensein beider Messeinrichtungen 201, 202 kann das Erreichen des Grenzwertes redundant ermittelt werden, so dass die Betriebssicherheit weiter erhöht wird. Auch kann eine Fehlfunktion einer der Messeinrichtungen 201, 202 oder der Traktionsvorrichtung 10 erkannt werden, beispielsweise bei einem Druckanstieg ohne Detektion einer Positionsänderung der Versteifungseinrichtung.

Mittels des Endlagensensors 203 und der Knickwinkelmesseinrichtung 204 bestimmt die Steuereinrichtung 50, ob der Knickwinkel 120 zu groß ist, d.h. ob die relative Verschwenkung zwischen Versteifungseinrichtung 20 und Konsole 25 zu groß ist. Erreicht der Knickwinkel 120 bzw. die relative Verschwenkung einen vorbestimmten Grenzwert, so steuert die Steuereinrichtung 50 die Traktionsvorrichtung derart, dass die Versteifungseinrichtung 20 eingefahren wird, d.h. die Traktionsvorrichtung 10 deaktiviert wird. Das Erreichen des Grenzwertes kann basierend auf einem entsprechenden Messsignal von dem Endlagensensors 203 ermittelt werden, oder durch Vergleich des gemessenen oder bestimmten Knickwinkels mit einem Knickwinkelgrenzwert. Bei Vorhandensein beider Messeinrichtungen 203, 204 kann das Erreichen des Grenzwertes redundant ermittelt werden, was die Betriebssicherheit weiter erhöht. Auch hier können die verschiedenen Messungen verwendet werden, um die Messwerte zu Plausibilisieren und ggf. eine Fehlfunktion einer der Messvorrichtungen 203, 204 oder der Traktionsvorrichtung 10 festzustellen.

Mit der Geschwindigkeitsmesseinrichtung 205 kann die Steuereinrichtung 50 ermitteln, ob die aktuelle Geschwindigkeit des Aufliegers einen Grenzwert erreicht oder überschritten hat. Erreicht die Geschwindigkeit des Aufliegers 102 den Grenzwert, so steuert die Steuereinrichtung 50 die Traktionsvorrichtung derart an, dass bei aktivierter Traktionsvorrichtung die Versteifungseinrichtung 20 eingefahren wird, d.h. die Traktionsvorrichtung 10 deaktiviert wird. Ist die Traktionsvorrichtung bereits deaktiviert, so blockiert die Steuereinrichtung 50 eine Aktivierung der Traktionsvorrichtung. Da bei hohen Geschwindigkeiten mit aktivierter Traktionsvorrichtung gefährliche Situationen auftreten können, wird somit die Betriebssicherheit weiter erhöht.

Des Weiteren sind in Figur 6 eine Ausgabeeinheit 210 sowie eine Eingabeeinheit 220 dargestellt, die mit Steuereinrichtung 50 gekoppelt sind und Teil des Systems 100 sein können. Ausgabeeinheit 210 und Eingabeeinheit 220 können auch separat von dem System 100 bereitgestellt werden, z.B. als mobiles Endgerät, insbesondere als Smartphone, Tablet oder dergleichen. Die Ausgabe- und Eingabeeinheit 210, 220 können auch als Module im Führerhaus der Zugmaschine oder auf einem Bedienfeld des Auflieger implementiert werden. Die Kopplung kann drahtgebunden oder drahtlos erfolgen, z.B. über eine WLAN, Bluetooth, ZigBEE, Z-wave oder eine ähnliche Verbindung. Steuereinrichtung 50 ist ausgestaltet, um ein Ausgabesignal an die Ausgabeeinheit 210 zu übermitteln. Das Ausgabesignal kann beispielsweise einen ermittelten Betriebszustand, eine gemessene Betriebsgröße, einen Aktivierungszustand der Traktionsvorrichtung 10 und/oder ein Warnsignal umfassen. Die Ausgabeeinrichtung 210 umfasst eine Anzeige, insbesondere einen Bildschirm, und ist eingerichtet, um das Ausgabesignal anzuzeigen. Beispielsweise kann der Aktivierungszustand, der Knickwinkel, der Böschungswinkel, die Geschwindigkeit, oder eine Kombination dieser angezeigt werden. Die Anzeige des Aktivierungszustandes ist insbesondere beim An- oder Abkoppeln hilfreich, um sicherzustellen, dass die Traktionsvorrichtung deaktiviert ist.

Vorzugsweise wird eine Warnmeldung angezeigt, wenn einer der vorab genannten Grenzwerte erreicht oder überschritten wird. Weiterhin kann die Ausgabeeinheit 210 auch einen Lautsprecher aufweisen und eine akustische Warnung ausgeben, wenn das Ausgabesignal ein Überschreiten eines Grenzwertes indiziert oder ein entsprechendes Warnsignal enthält. Weiterhin kann das Ausgabesignal Informationen enthalten, die einen Fehler in einer der Messeinrichtungen oder der Traktionsvorrichtung 10 angeben. Das Vorliegen eines Fehlers kann wie vorab beschrieben basierend auf redundanten Messungen ermittelt werden.

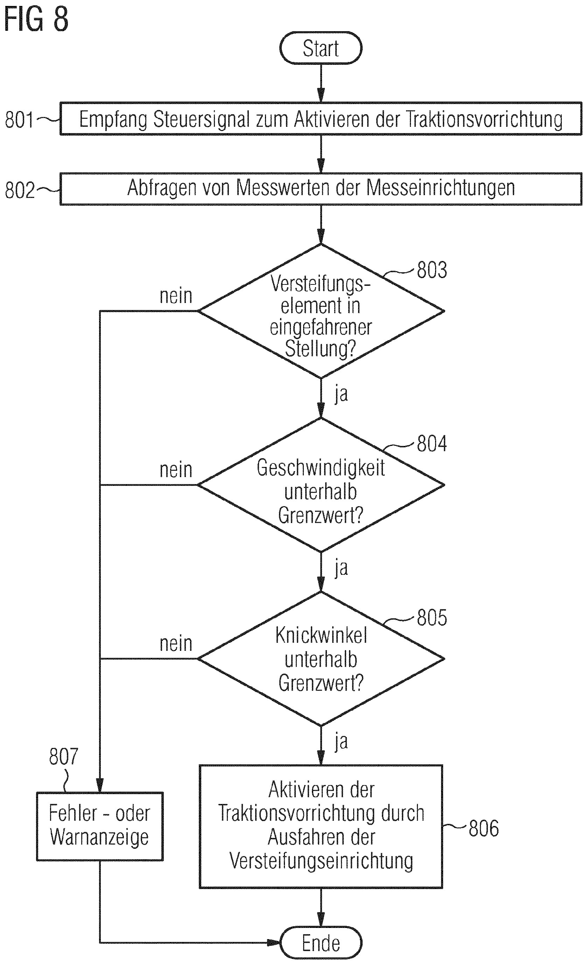

Die Eingabeeinheit 220 kann im einfachsten Fall einen Schalter umfassen, der am Auflieger oder an der Zugmaschine angebracht ist und bei dessen Betätigung die Steuereinrichtung 50 die Traktionsvorrichtung 10 aktiviert. Bei Verwendung eines mobilen Endgeräts als Eingabeeinheit 220 kann diese als Touchscreen implementiert sein. Die Steuereinrichtung 50 ist ausgestaltet, um von der Eingabeeinheit 220 ein Eingabesignal zu empfangen, das einen Befehl zur Aktivierung oder Deaktivierung der Traktionsvorrichtung enthält. Basierend auf diesem Befehl kann die Steuereinrichtung 50 die Traktionsvorrichtung 10 ansteuern, wobei des Weiteren einer oder mehrere der ermittelten Betriebszustände berücksichtigt werden können. Dies ist nachfolgend mit Bezug auf Figur 8 näher erklärt.

Die Steuereinrichtung 50 weist entsprechende Schnittstellen für die Verbindung mit den Messeinrichtungen 201-205 und der Eingabe-/Ausgabeeinheit 210, 220 auf. Diese können wie vorab erwähnt als drahtgebundene bzw. drahtlose Schnittstellen ausgestaltet sein und z. B. von entsprechenden elektrischen Eingängen und einem entsprechenden Transmitter bereitgestellt werden. Steuereinrichtung 50 weist des Weiteren eine Recheneinheit 251, z.B. einen Mikroprozessor, ASIC oder DSP, sowie einen Speicher 252 auf, der z. B. ROM, RAM, Magnetspeicher, Flash-Speicher oder ähnliche Speicher umfassen kann. Der Speicher 252 speichert ausführbare Instruktionen, die bei Ausführung auf der Recheneinheit 251 eines der hierin beschriebenen Steuerverfahren ausführen. Speicher 252 kann des Weiteren die vorab genannten Grenzwerte für die Betriebszustände speichern. Bei anderen Ausführungsformen kann die Steuereinrichtung auch als einfache elektronische Schaltung ausgestaltet sein. Die Steuereinrichtung muss nicht als eine physikalische Einheit implementiert sein, die sämtliche der beschriebenen Verfahrensschritte ausführt. Die Steuereinrichtung kann beispielsweise eine erste Einheit aufweisen, die an dem Auflieger angebracht ist, und eine zweite Einheit, die Teil eines mobilen Endgerätes ist, wobei beide Einheiten über eine Datenverbindung miteinander kommunizieren. Die am Auflieger angebrachte Einheit kann erfasste Betriebsgrößen dann an die zweite Einheit übermitteln, die dann den Betriebszustand bestimmt.

Figur 8 ist ein Flussdiagramm, das ein Verfahren veranschaulicht, das von der Steuereinrichtung 50 bei Aktivierung der Traktionsvorrichtung 10 ausgeführt werden kann. In Schritt 801 empfängt die Steuereinrichtung 50 ein Eingabesignal, insbesondere einen Befehl, zum Aktivieren der Traktionsvorrichtung. Das Eingabesignal kann von der Eingabeeinheit 220 in Erwiderung auf das Betätigen eines Schalters, Tasters oder graphischen Bedienelements durch einen Benutzer erzeugt werden. In Schritt 802 fragt die Steuereinrichtung 50 Messwerte von den Messeinrichtungen 201-205 ab.

In den nachfolgenden Entscheidungsschritten prüft die Steuereinrichtung 50, ob ein Aktivieren der Traktionsvorrichtung 10 sicher ist. In Schritt 803 wird geprüft, ob die Traktionsvorrichtung deaktiviert ist, d.h. ob die Versteifungseinrichtung 20 in einer eingefahrenen Stellung ist. Dies kann auf Basis der Messsignale des Drucksensors 201 und/oder des Wegsensors 202 erfolgen. Ist die Traktionseinrichtung nicht deaktiviert, so wird ein entsprechendes Ausgabesignal an die Ausgabeeinheit 210 übermittelt und es erfolgt die Ausgabe eines optischen oder akustischen Warnsignals (Schritt 807). Ist die Traktionsvorrichtung deaktiviert, so wird in Schritt 804 ermittelt, ob die Geschwindigkeit des Aufliegers unterhalb eines vorbestimmten Grenzwertes liegt. Ist dies nicht der Fall, so erfolgt wiederum die Ausgabe eines Warnsignals in Schritt 807. Ist die Geschwindigkeit gering genug, so wird in Schritt 805 ermittelt, ob der Knickwinkel unterhalb eines vorbestimmten Grenzwertes liegt, bzw. ob die Verschwenkung zwischen Versteifungseinrichtung 20 und Konsole 25 unterhalb eines entsprechenden Grenzwertes liegt. Das kann basierend auf den Messsignalen des Endlagensensors 203 und/oder des Knickwinkelsensors 204 erfolgen. Ist dies nicht der Fall, so erfolgt wiederum die Ausgabe eines Warnsignals in Schritt 807. Ist der Knickwinkel ausreichend klein, so erfolgt in Schritt 806 das Aktivieren der Traktionsvorrichtung 10 durch Ausfahren der Versteifungseinrichtung 20. Steuereinrichtung 50 kann dafür z. B. das Steuerventil 51 entsprechend ansteuern. Durch das Verfahren der Figur 8 kann erreicht werden, dass das Aktivieren der Traktionsvorrichtung 10 sicher ist. Insbesondere können sicherheitskritische Situationen vermieden werden, wie sie bei zu hohem Knickwinkel oder zu hoher Geschwindigkeit auftreten können.

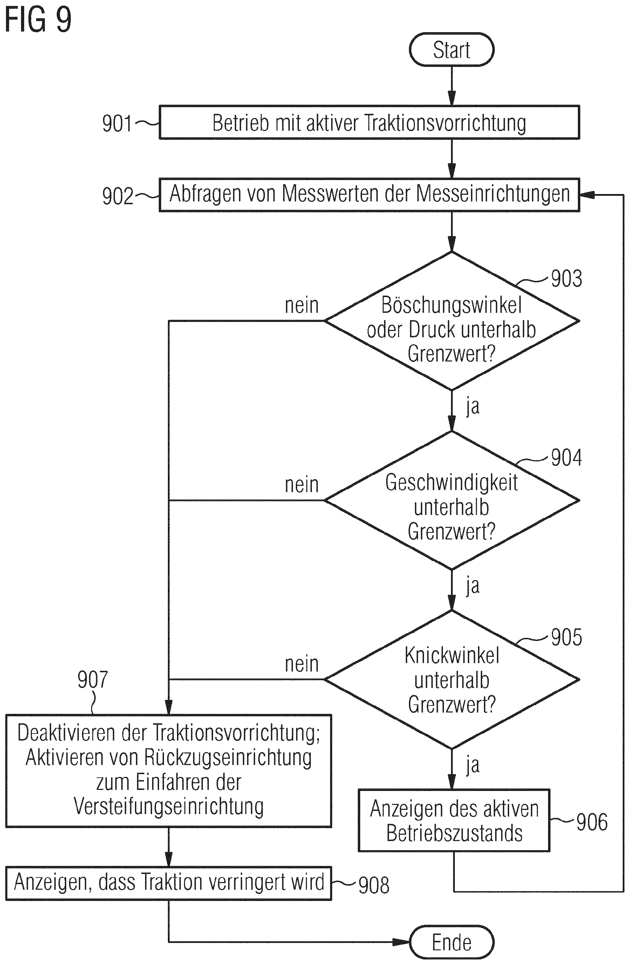

Figur 9 ist ein Flussdiagramm, das ein Verfahren veranschaulicht, das von der Steuereinrichtung 50 bei aktiver Traktionsvorrichtung 10 ausgeführt werden kann. In Schritt 901 wird der Sattelzug mit aktivierter Traktionsvorrichtung 10 betrieben. Während des Betriebs, z. B. während der Fahrt, fragt die Steuereinrichtung 50 in Schritt 902 Messwerte von zwei oder mehreren der Messeinrichtungen 201-205 ab. In den nachfolgenden Schritten 903-905 wird geprüft, ob der aktuelle Betriebszustand ein Sicherheitsrisiko darstellt.

In Schritt 903 wird ermittelt, ob der Böschungswinkel oder der Druck in der Versteifungseinrichtung unterhalb eines vorbestimmten Grenzwertes liegt. Dies kann auf Basis der Messsignale des Drucksensors 201 und/oder des Wegsensors 202 erfolgen. Bei ausreichend geringem Böschungswinkel bzw. Druck wird in Schritt 904 geprüft, ob die Geschwindigkeit des Aufliegers unterhalb eines vorbestimmten Grenzwertes liegt. Dafür kann das Messsignal der Geschwindigkeitsmesseinrichtung 205 verwendet werden. Ist die Geschwindigkeit ausreichend niedrig, so wird in Schritt 905 geprüft, ob der Knickwinkel unterhalb eines entsprechenden Grenzwertes liegt. Das kann basierend auf den Messsignalen des Endlagensensors 203 und/oder des Knickwinkelsensors 204 erfolgen. Ist auch dies der Fall, so kann in Schritt 906 der aktive Betriebszustand der Traktionsvorrichtung angezeigt werden (d.h. ein fehlerfreier Betrieb) und der Betrieb kann fortgesetzt werden. Insbesondere kann in Schritt 902 mit einer fortlaufenden Prüfung fortgefahren werden.

Wird in einem der Prüfschritte 903-905 der entsprechende Grenzwert erreicht oder überschritten, so erfolgt in Schritt 907 ein automatisches Deaktivieren der Traktionsvorrichtung, insbesondere durch Einfahren der Versteifungseinrichtung 20. Dies kann passiv erfolgen, beispielsweise durch Ablassen von Luft aus Balg 21, oder aktiv durch Aktivieren des angetriebenen Aktuators 35 der Rückzugseinrichtung 30. Ein aktives Einfahren ist bevorzugt, da somit eine schnelle Deaktivierung sichergestellt wird und ggf. eine sicherheitskritische Situation vermieden werden kann. In Schritt 210 wird mittels der Ausgabeeinheit 210 angezeigt, dass die Traktionsvorrichtung deaktiviert und damit die Traktion verringert wird. Zusätzlich oder alternativ kann ein akustisches Warnsignal ausgegeben werden. Der Fahrer des Sattelzuges wird somit auf den geänderten Betriebszustand hingewiesen. Wie erwähnt kann die Ausgabeeinheit eine Anzeige oder ein Display im Führerhaus umfassen und/oder ein Display eines mobilen Endgerätes, wie beispielsweise eines Smartphones, auf dem eine entsprechende Ausgabe erfolgt.

Anschließend wird der Sattelzug mit deaktivierter Traktionsvorrichtung betrieben. Möchte der Fahrer die Traktionsvorrichtung wieder aktivieren, so kann dies gemäß dem Verfahren der Figur 8 unter Abfrage der entsprechenden Betriebsgrößen erfolgen.

Es sollte klar sein, dass einige Schritte der mit Bezug auf Figuren 8 und 9 beschriebenen Verfahren optional sind. So ist es ausreichend, wenn nur eine oder zwei der Betriebszustände Böschungswinkel/Druck, Geschwindigkeit und Knickwinkel ermittelt und ausgewertet werden, um bereits eine Erhöhung der Betriebssicherheit zu erzielen. Die Betriebsgrößen können mit nur einer oder redundant mit zwei Messeinrichtungen erfasst werden. Ebenfalls ist es möglich, die Reihenfolge der beschriebenen Schritte zu ändern oder Schritte gleichzeitig auszuführen. Z. B. können die Vergleiche mit den Grenzwerten in verschiedener Reihenfolge oder zeitgleich durchgeführt werden. Auch können zusätzliche Schritte vorgesehen werden, wie z. B. das Prüfen des Böschungswinkels in dem Verfahren der Figur 8. Eine Ausführungsform des Verfahrens umfasst die Verfahren der Figuren 8 und 9.

Bei einer weiteren Ausführungsform des Verfahrens wird mittels des Endlagensensors und/oder des Kraftbeaufschlagungssensors beim Auf- oder Absatteln geprüft, ob die Traktionsvorrichtung aktiviert ist. Ist dies der Fall, so wird die Traktionsvorrichtung automatisch deaktiviert und/oder ein Warnsignal mittels Ausgabeeinheit 210 ausgegeben, beispielsweise als akustisches oder optisches Warnsignal. Bei einer weiteren Ausführungsform wird mittels des Kraftbeaufschlagungssensors und des Wegsensors geprüft, ob das Ausfahren oder Einfahren der Versteifungseinrichtung bei Ansteuerung dieser erfolgreich war. Wird z. B. die Versteifungseinrichtung trotz Deaktivierung (beispielsweise durch Luftablassen aus dem Balg) nicht eingefahren, so wird ein optisches oder akustisches Warnsignal mittels Ausgabeeinheit 210 ausgegeben.

Das Verfahren kann beim Aktivieren der Traktionsvorrichtung auch einen Schritt umfassen, der mittels des Wegsensors 202 prüft, ob die Wegstrecke beim Ausfahren der Versteifungseinrichtung 20 einen vorbestimmten Grenzwert überschreitet. Dadurch kann festgestellt werden, ob an der Zugmaschine eine Konsole vorhanden ist, auf die die Versteifungseinrichtung Kraft aufbringen kann. Zusätzlich oder alternativ kann dies auch mittels des Endlagensensors 203 festgestellt werden, wenn dieser keinen Kontakt mit einer Konsole detektiert. Das Ausfahren der Versteifungseinrichtung 20 kann dann gestoppt werden und es kann ein optisches oder akustisches Warnsignal mittels Ausgabeeinheit 210 ausgegeben werden. Schäden an einer Zugmaschine ohne Konsole können somit vermieden werden.

Es sollte klar sein, dass die beschriebenen Verfahren alle Teil eines gemeinsamen Verfahrens sein können und dass das System, insbesondere die Steuervorrichtung 50, zur Durchführung sämtlicher dieser Verfahren ausgestaltet sein kann. Das vorab beschriebene System in seinen verschiedenen Ausgestaltungen ist relativ einfach aufgebaut und nahezu wartungsfrei. Des Weiteren lässt es sich kostengünstig implementieren. Insbesondere kann es ohne wesentliche Modifikationen an der Zugmaschine in einem Auflieger integriert werden, auch als Nachrüstsatz. Dadurch werden Kostenvorteile gegenüber herkömmlichen Lösungen erzielt. Mit dem System und den hierin beschriebenen Verfahren lässt sich die Betriebssicherheit deutlich verbessern und lassen sich Schäden an Auflieger und Zugmaschine vermeiden. Somit wird auf sichere Weise die Traktion der Zugmaschine verbessert.

## Patentansprüche

1. Steuereinrichtung zum Ansteuern einer Traktionsvorrichtung (10), die eine Versteifungseinrichtung (20) aufweist, mit der die Kraft vergrößerbar ist, die ein Auflieger (102) eines Sattelzuges auf einen hinteren Bereich einer Zugmaschine (101) des Sattelzuges zur Erhöhung der Traktion der Zugmaschine (101) aufbringt, wobei die Steuereinrichtung (50) umfasst:
- mindestens eine erste Schnittstelle zu einer ersten Messeinrichtung (201-203), die eine erste Betriebsgröße der Traktionsvorrichtung (10) erfasst,
- mindestens eine zweite Schnittstelle zu einer zweiten Messeinrichtung (201-205), die eine zweite Betriebsgröße der Traktionsvorrichtung (10) oder des Sattelzuges erfasst,
wobei die Steuereinrichtung (50) zum Empfang entsprechender Messignale von den mindestens zwei Messeinrichtungen (201-205) ausgestaltet ist, und
wobei die Steuereinrichtung (50) eingerichtet ist, um die Messsignale zur Ermittlung eines Betriebszustandes der Traktionsvorrichtung (10) und/oder des Sattelzuges auszuwerten und die Traktionsvorrichtung (10) basierend auf dem ermittelten Betriebszustand anzusteuern.

2. Steuereinrichtung nach Anspruch 1, wobei die Steuereinrichtung eingerichtet ist, um einen Betriebszustand zu identifizieren, der nicht einem vorbestimmten Betriebszustand entspricht, und um die Traktionsvorrichtung (10) in Abhängigkeit von dem identifizierten Betriebszustand anzusteuern durch: ein Blockieren der Aktivierung der Traktionsvorrichtung (10); ein Deaktivieren der Traktionsvorrichtung (10); und/oder das Ausgeben eines Signals, das den identifizierten Betriebszustand angibt.

3. Steuereinrichtung nach Anspruch 1 oder 2, wobei die Steuereinrichtung (50) weiterhin eingerichtet ist, um die Messsignale einer der Messeinrichtungen (201-205) basierend auf den Messignalen einer anderen der Messeinrichtungen (201-205) zu plausibilisieren.

4. Steuereinrichtung nach einem der vorstehenden Ansprüche, wobei die erste Messeinrichtung eine Messeinrichtung aus einer ersten Gruppe ist, die besteht aus:
- einem Kraftbeaufschlagungssensor (201), der eine Messgröße erfasst, die abhängig ist von einer Kraftbeaufschlagung der Versteifungseinrichtung (20), insbesondere einem Drucksensor, der einen Druck in der Versteifungseinrichtung (20) erfasst;
- einem Wegsensor (202), der eine Distanz erfasst, über die die Versteifungseinrichtung (20) relativ zu einem eingefahrenen Zustand ausgefahren ist; und
- einem Endlagensensor (203), der das Erreichen einer vorbestimmten Verschwenkung der Versteifungseinrichtung (20) gegenüber einer Konsole (25), auf die von der Versteifungseinrichtung (20) eine Kraft aufbringbar ist, erfasst,
und wobei die zweite Messeinrichtung eine andere Messeinrichtung aus der ersten Gruppe oder eine Messeinrichtung aus einer zweiten Gruppe ist, die besteht aus:
- einer Knickwinkelmesseinrichtung (204), die einen Knickwinkel (120) zwischen Zugmaschine (101) und Auflieger (102) erfasst; und
- einer Geschwindigkeitsmesseinrichtung (205), die eine Geschwindigkeit des Aufliegers (102) erfasst.

5. Steuereinrichtung nach Anspruch 4, wobei die erste Messeinrichtung der Endlagensensor (203) ist und wobei die zweite Messeinrichtung die Knickwinkelmesseinrichtung (204) ist, wobei die Steuereinrichtung des Weiteren mindestens eine dritte Schnittstelle zu einer dritten Messeinrichtung aufweist, die eine andere Messeinrichtung aus der ersten Gruppe ist, wobei vorzugsweise die dritte Messeirichtung der Kraftbeaufschlagungssensor (201) ist und die Steuereinrichtung des Weiteren mindestens eine vierte Schnittstelle zu dem Wegsensor (202) aufweist.

6. Steuereinrichtung nach einem der vorstehenden Ansprüche, wobei die erste oder die zweite Messeinrichtung einen Endlagensensor (203) aufweist, der das Erreichen einer vorbestimmten Verschwenkung der Versteifungseinrichtung (20) gegenüber einer Konsole (25), auf die von der Versteifungseinrichtung (20) eine Kraft aufbringbar ist, erfasst, oder eine Knickwinkelmesseinrichtung (204) aufweist, die einen Knickwinkel (120) zwischen Zugmaschine (101) und Auflieger (102) erfasst, und wobei die Steuereinrichtung eingerichtet ist, um basierend auf dem Messignal der entsprechenden Messeinrichtung das Erreichen einer vorbestimmten maximalen Verschwenkung zwischen der Versteifungseinrichtung (20) und der Konsole (25) zu bestimmen, und bei Vorliegen der maximalen Verschwenkung die Traktionsvorrichtung (10) derart anzusteuern, dass die Versteifungseinrichtung (20) in eine eingefahrene Stellung gebracht wird.

7. Steuereinrichtung nach einem der vorstehenden Ansprüche, wobei die erste oder die zweite Messeinrichtung einen Kraftbeaufschlagungssensor (201) aufweist, der eine Messgröße erfasst, die abhängig ist von einer Kraftbeaufschlagung der Versteifungseinrichtung, oder einen Wegsensor (202) aufweist, der eine Distanz erfasst, über die die Versteifungseinrichtung (20) relativ zu einem eingefahrenen Zustand ausgefahren wurde, und wobei die Steuereinrichtung (50) eingerichtet ist, um basierend auf dem Messignal der entsprechenden Messeinrichtung (201, 202) zu bestimmen, ob sich die Versteifungseinrichtung (20) in einer eingefahren oder einer ausgefahren Stellung befindet.

8. Steuereinrichtung nach einem der vorstehenden Ansprüche, wobei die Steuereinrichtung (50) eingerichtet ist, um bei aktivierter Traktionsvorrichtung (10) die Versteifungseinrichtung (20) in eine eingefahrene Stellung zu bringen, wenn die Steuereinrichtung (50) basierend auf mindestens einem der Messsignale feststellt, dass ein Knickwinkel (120) zwischen Zugmaschine (101) und Auflieger (102) einen Grenzwert übersteigt, ein Böschungswinkel zwischen Zugmaschine (101) und Auflieger (102) einen Grenzwert übersteigt, die Geschwindigkeit des Aufliegers (102) einen Grenzwert übersteigt, und/oder der Auflieger (102) nicht an eine Zugmaschine (101) gekoppelt ist.

9. Steuereinrichtung nach einem der vorstehenden Ansprüche, wobei die Steuereinrichtung (50) mit einer Ausgabeeinheit (210) gekoppelt oder koppelbar ist, und wobei die Steuereinrichtung (50) eingerichtet ist, um den ermittelten Betriebszustand der Traktionsvorrichtung (10) an die Ausgabeeinheit (210) zur Ausgabe zu übermitteln.

10. Steuereinrichtung nach einem der vorstehenden Ansprüche, wobei die Steuereinrichtung (50) mit einer Eingabeeinheit (220) gekoppelt oder koppelbar ist, und wobei die Steuereinrichtung (50) eingerichtet ist, um von der Eingabeeinheit (220) ein Eingabesignal zu empfangen, und basierend auf dem Eingabesignal die Traktionsvorrichtung (10) zu aktivieren.

11. Steuereinrichtung nach einem der vorstehenden Ansprüche, wobei die Traktionsvorrichtung (10) eine Rückzugseinrichtung (30) mit einem angetriebenen Aktuator (35) aufweist, mit der die Versteifungseinrichtung (20) durch Betreiben des Aktuators (35) von einer ausgefahrenen Stellung in eine eingefahren Stellung bringbar ist, wobei die Steuereinrichtung (50) eingerichtet ist, um basierend auf den Messsignalen den Aktuator (35) zur Deaktivierung der Traktionsvorrichtung (10) anzusteuern.

12. System zur Erhöhung der Traktion einer Zugmaschine (101) eines Sattelzuges, an die mittels einer Kupplung (110) ein Auflieger (102) koppelbar ist, wobei das System umfasst:
- eine Steuereinrichtung (50) gemäß einem der vorstehenden Ansprüche,
- die Traktionsvorrichtung (10), wobei die Versteifungseinrichtung (20) ausgestaltet ist, um mit dem Auflieger (101) und der Zugmaschine (102) zusammenzuwirken und einer Kippbewegung des Aufliegers (102) relativ zur Zugmaschine (101) derart entgegenzuwirken, dass die Kraft erhöht wird, die der Auflieger (102) auf einen hinteren Bereich der Zugmaschine (101) aufbringt,
- mindestens die erste Messeinrichtung (201-203) und die zweite Messeinrichtung (201-205),
wobei die Steuereinrichtung (50) mit den mindestens zwei Messeinrichtungen (201-205) zum Empfangen der Messignale gekoppelt ist.

13. Auflieger, der mittels einer Kupplung (110) an eine Zugmaschine (101) eines Sattelzugs koppelbar ist, wobei der Auflieger (101) ein System zu Erhöhung der Traktion der Zugmaschine gemäß Anspruch 12 umfasst, wobei die Traktionsvorrichtung (10), die erste Messeinrichtung (201-203), die zweite Messeinrichtung (201-205) und die Steuereinrichtung (50) an dem Auflieger (102) angebracht sind.

14. Verfahren zur Steuerung einer Traktionsvorrichtung (10), die eine Versteifungseinrichtung (20) aufweist, mit der die Kraft vergrößerbar ist, die ein Auflieger (102) eines Sattelzuges auf einen hinteren Bereich einer Zugmaschine (101) des Sattelzuges zur Erhöhung der Traktion der Zugmaschine (101) aufbringt, wobei das Verfahren umfasst:
- Erfassen mindestens einer ersten Betriebsgröße der Traktionsvorrichtung (10) mit einer ersten Messeinrichtung (201-203),
- Erfassen mindestens einer zweiten Betriebsgröße der Traktionsvorrichtung (10) oder des Sattelzugs mit einer zweiten Messeinrichtung (201-205),
- Ermitteln eines Betriebszustandes der Traktionsvorrichtung (10) und/oder des Sattelzuges basierend auf den erfassten Betriebsgrößen, und
- Ansteuern der Traktionsvorrichtung (10) basierend auf dem ermittelten Betriebszustand.

15. Verfahren nach Anspruch 14, wobei das Verfahren bei aktivierter Traktionsvorrichtung (10) des Weiteren umfasst:
- Ermitteln, basierend auf den erfassten Betriebsgrößen, zumindest eines folgenden Betriebszustände der Traktionsvorrichtung (10) oder des Sattelzuges: Geschwindigkeit des Aufliegers (102); Knickwinkel zwischen Auflieger (102) und Zugmaschine (101); und Böschungswinkel zwischen Auflieger (102) und Zugmaschine (101), und
- wenn der ermittelte Betriebszustand der Traktionsvorrichtung (10) oder des Sattelzuges einem vorbestimmten Zustand nicht entspricht, Ansteuern der Traktionsvorrichtung (10) zur Deaktivierung der Traktionsvorrichtung (10).

## Geänderte Patentansprüche

### Geänderte Patentansprüche gemäss Regel 137(2) EPÜ.

1. Steuereinrichtung zum Ansteuern einer Traktionsvorrichtung (10), die eine Versteifungseinrichtung (20) aufweist, mit der die Kraft vergrößerbar ist, die ein Auflieger (102) eines Sattelzuges auf einen hinteren Bereich einer Zugmaschine (101) des Sattelzuges zur Erhöhung der Traktion der Zugmaschine (101) aufbringt, wobei die Steuereinrichtung (50) umfasst:
- mindestens eine erste Schnittstelle zu einer ersten Messeinrichtung (201-203), die eine erste Betriebsgröße der Traktionsvorrichtung (10) erfasst,
- mindestens eine zweite Schnittstelle zu einer zweiten Messeinrichtung (201-205), die eine zweite Betriebsgröße der Traktionsvorrichtung (10) oder des Sattelzuges erfasst,
wobei die Steuereinrichtung (50) zum Empfang entsprechender Messignale von den mindestens zwei Messeinrichtungen (201-205) ausgestaltet ist, und
wobei die Steuereinrichtung (50) eingerichtet ist, um die Messsignale zur Ermittlung eines Betriebszustandes der Traktionsvorrichtung (10) und/oder des Sattelzuges auszuwerten und die Traktionsvorrichtung (10) basierend auf dem ermittelten Betriebszustand anzusteuern,
**dadurch gekennzeichnet, dass** die erste Messeinrichtung eine Messeinrichtung aus einer ersten Gruppe ist, die besteht aus:
- einem Kraftbeaufschlagungssensor (201), der eine Messgröße erfasst, die abhängig ist von einer Kraftbeaufschlagung der Versteifungseinrichtung (20);
- einem Wegsensor (202), der eine Distanz erfasst, über die die Versteifungseinrichtung (20) relativ zu einem eingefahrenen Zustand ausgefahren ist; und
- einem Endlagensensor (203), der das Erreichen einer vorbestimmten Verschwenkung der Versteifungseinrichtung (20) gegenüber einer Konsole (25), auf die von der Versteifungseinrichtung (20) eine Kraft aufbringbar ist, erfasst,
und dass die zweite Messeinrichtung eine andere Messeinrichtung aus der ersten Gruppe oder eine Messeinrichtung aus einer zweiten Gruppe ist, die besteht aus:
- einer Knickwinkelmesseinrichtung (204), die einen Knickwinkel (120) zwischen Zugmaschine (101) und Auflieger (102) erfasst; und
- einer Geschwindigkeitsmesseinrichtung (205), die eine Geschwindigkeit des Aufliegers (102) erfasst.

2. Steuereinrichtung nach Anspruch 1, wobei die Steuereinrichtung eingerichtet ist, um einen Betriebszustand zu identifizieren, der nicht einem vorbestimmten Betriebszustand entspricht, und um die Traktionsvorrichtung (10) in Abhängigkeit von dem identifizierten Betriebszustand anzusteuern durch: ein Blockieren der Aktivierung der Traktionsvorrichtung (10); ein Deaktivieren der Traktionsvorrichtung (10); und/oder das Ausgeben eines Signals, das den identifizierten Betriebszustand angibt.

3. Steuereinrichtung nach Anspruch 1 oder 2, wobei die Steuereinrichtung (50) weiterhin eingerichtet ist, um die Messsignale einer der Messeinrichtungen (201-205) basierend auf den Messignalen einer anderen der Messeinrichtungen (201-205) zu plausibilisieren.

4. Steuereinrichtung nach einem der vorstehenden Ansprüche, wobei der Kraftbeaufschlagungssensor (201) ein Drucksensor ist, der einen Druck in der Versteifungseinrichtung (20) erfasst.

5. Steuereinrichtung nach Anspruch 4, wobei die erste Messeinrichtung der Endlagensensor (203) ist und wobei die zweite Messeinrichtung die Knickwinkelmesseinrichtung (204) ist, wobei die Steuereinrichtung des Weiteren mindestens eine dritte Schnittstelle zu einer dritten Messeinrichtung aufweist, die eine andere Messeinrichtung aus der ersten Gruppe ist, wobei vorzugsweise die dritte Messeirichtung der Kraftbeaufschlagungssensor (201) ist und die Steuereinrichtung des Weiteren mindestens eine vierte Schnittstelle zu dem Wegsensor (202) aufweist.

6. Steuereinrichtung nach einem der vorstehenden Ansprüche, wobei die erste oder die zweite Messeinrichtung einen Endlagensensor (203) aufweist, der das Erreichen einer vorbestimmten Verschwenkung der Versteifungseinrichtung (20) gegenüber einer Konsole (25), auf die von der Versteifungseinrichtung (20) eine Kraft aufbringbar ist, erfasst, oder eine Knickwinkelmesseinrichtung (204) aufweist, die einen Knickwinkel (120) zwischen Zugmaschine (101) und Auflieger (102) erfasst, und wobei die Steuereinrichtung eingerichtet ist, um basierend auf dem Messignal der entsprechenden Messeinrichtung das Erreichen einer vorbestimmten maximalen Verschwenkung zwischen der Versteifungseinrichtung (20) und der Konsole (25) zu bestimmen, und bei Vorliegen der maximalen Verschwenkung die Traktionsvorrichtung (10) derart anzusteuern, dass die Versteifungseinrichtung (20) in eine eingefahrene Stellung gebracht wird.

7. Steuereinrichtung nach einem der vorstehenden Ansprüche, wobei die erste oder die zweite Messeinrichtung einen Kraftbeaufschlagungssensor (201) aufweist, der eine Messgröße erfasst, die abhängig ist von einer Kraftbeaufschlagung der Versteifungseinrichtung, oder einen Wegsensor (202) aufweist, der eine Distanz erfasst, über die die Versteifungseinrichtung (20) relativ zu einem eingefahrenen Zustand ausgefahren wurde, und wobei die Steuereinrichtung (50) eingerichtet ist, um basierend auf dem Messignal der entsprechenden Messeinrichtung (201, 202) zu bestimmen, ob sich die Versteifungseinrichtung (20) in einer eingefahren oder einer ausgefahren Stellung befindet.

8. Steuereinrichtung nach einem der vorstehenden Ansprüche, wobei die Steuereinrichtung (50) eingerichtet ist, um bei aktivierter Traktionsvorrichtung (10) die Versteifungseinrichtung (20) in eine eingefahrene Stellung zu bringen, wenn die Steuereinrichtung (50) basierend auf mindestens einem der Messsignale feststellt, dass ein Knickwinkel (120) zwischen Zugmaschine (101) und Auflieger (102) einen Grenzwert übersteigt, ein Böschungswinkel zwischen Zugmaschine (101) und Auflieger (102) einen Grenzwert übersteigt, die Geschwindigkeit des Aufliegers (102) einen Grenzwert übersteigt, und/oder der Auflieger (102) nicht an eine Zugmaschine (101) gekoppelt ist.

9. Steuereinrichtung nach einem der vorstehenden Ansprüche, wobei die Steuereinrichtung (50) mit einer Ausgabeeinheit (210) gekoppelt oder koppelbar ist, und wobei die Steuereinrichtung (50) eingerichtet ist, um den ermittelten Betriebszustand der Traktionsvorrichtung (10) an die Ausgabeeinheit (210) zur Ausgabe zu übermitteln.

10. Steuereinrichtung nach einem der vorstehenden Ansprüche, wobei die Steuereinrichtung (50) mit einer Eingabeeinheit (220) gekoppelt oder koppelbar ist, und wobei die Steuereinrichtung (50) eingerichtet ist, um von der Eingabeeinheit (220) ein Eingabesignal zu empfangen, und basierend auf dem Eingabesignal die Traktionsvorrichtung (10) zu aktivieren.

11. Steuereinrichtung nach einem der vorstehenden Ansprüche, wobei die Traktionsvorrichtung (10) eine Rückzugseinrichtung (30) mit einem angetriebenen Aktuator (35) aufweist, mit der die Versteifungseinrichtung (20) durch Betreiben des Aktuators (35) von einer ausgefahrenen Stellung in eine eingefahren Stellung bringbar ist, wobei die Steuereinrichtung (50) eingerichtet ist, um basierend auf den Messsignalen den Aktuator (35) zur Deaktivierung der Traktionsvorrichtung (10) anzusteuern.

12. System zur Erhöhung der Traktion einer Zugmaschine (101) eines Sattelzuges, an die mittels einer Kupplung (110) ein Auflieger (102) koppelbar ist, wobei das System umfasst:
- eine Steuereinrichtung (50) gemäß einem der vorstehenden Ansprüche,
- die Traktionsvorrichtung (10), wobei die Versteifungseinrichtung (20) ausgestaltet ist, um mit dem Auflieger (101) und der Zugmaschine (102) zusammenzuwirken und einer Kippbewegung des Aufliegers (102) relativ zur Zugmaschine (101) derart entgegenzuwirken, dass die Kraft erhöht wird, die der Auflieger (102) auf einen hinteren Bereich der Zugmaschine (101) aufbringt,
- mindestens die erste Messeinrichtung (201-203) und die zweite Messeinrichtung (201-205),
wobei die Steuereinrichtung (50) mit den mindestens zwei Messeinrichtungen (201-205) zum Empfangen der Messignale gekoppelt ist.

13. Auflieger, der mittels einer Kupplung (110) an eine Zugmaschine (101) eines Sattelzugs koppelbar ist, wobei der Auflieger (101) ein System zu Erhöhung der Traktion der Zugmaschine gemäß Anspruch 12 umfasst, wobei die Traktionsvorrichtung (10), die erste Messeinrichtung (201-203), die zweite Messeinrichtung (201-205) und die Steuereinrichtung (50) an dem Auflieger (102) angebracht sind.

14. Verfahren zur Steuerung einer Traktionsvorrichtung (10), die eine Versteifungseinrichtung (20) aufweist, mit der die Kraft vergrößerbar ist, die ein Auflieger (102) eines Sattelzuges auf einen hinteren Bereich einer Zugmaschine (101) des Sattelzuges zur Erhöhung der Traktion der Zugmaschine (101) aufbringt, wobei das Verfahren umfasst:
- Erfassen mindestens einer ersten Betriebsgröße der Traktionsvorrichtung (10) mit einer ersten Messeinrichtung (201-203),
- Erfassen mindestens einer zweiten Betriebsgröße der Traktionsvorrichtung (10) oder des Sattelzugs mit einer zweiten Messeinrichtung (201-205),
- Ermitteln eines Betriebszustandes der Traktionsvorrichtung (10) und/oder des Sattelzuges basierend auf den erfassten Betriebsgrößen, und
- Ansteuern der Traktionsvorrichtung (10) basierend auf dem ermittelten Betriebszustand,
**dadurch gekennzeichnet, dass** die erste Messeinrichtung eine Messeinrichtung aus einer ersten Gruppe ist, die besteht aus:
- einem Kraftbeaufschlagungssensor (201), der eine Messgröße erfasst, die abhängig ist von einer Kraftbeaufschlagung der Versteifungseinrichtung (20);
- einem Wegsensor (202), der eine Distanz erfasst, über die die Versteifungseinrichtung (20) relativ zu einem eingefahrenen Zustand ausgefahren ist; und
- einem Endlagensensor (203), der das Erreichen einer vorbestimmten Verschwenkung der Versteifungseinrichtung (20) gegenüber einer Konsole (25), auf die von der Versteifungseinrichtung (20) eine Kraft aufbringbar ist, erfasst,
und dass die zweite Messeinrichtung eine andere Messeinrichtung aus der ersten Gruppe oder eine Messeinrichtung aus einer zweiten Gruppe ist, die besteht aus:
- einer Knickwinkelmesseinrichtung (204), die einen Knickwinkel (120) zwischen Zugmaschine (101) und Auflieger (102) erfasst; und
- einer Geschwindigkeitsmesseinrichtung (205), die eine Geschwindigkeit des Aufliegers (102) erfasst.

15. Verfahren nach Anspruch 14, wobei das Verfahren bei aktivierter Traktionsvorrichtung (10) des Weiteren umfasst:
- Ermitteln, basierend auf den erfassten Betriebsgrößen, zumindest eines folgenden Betriebszustände der Traktionsvorrichtung (10) oder des Sattelzuges: Geschwindigkeit des Aufliegers (102); Knickwinkel zwischen Auflieger (102) und Zugmaschine (101); und Böschungswinkel zwischen Auflieger (102) und Zugmaschine (101), und
- wenn der ermittelte Betriebszustand der Traktionsvorrichtung (10) oder des Sattelzuges einem vorbestimmten Zustand nicht entspricht, Ansteuern der Traktionsvorrichtung (10) zur Deaktivierung der Traktionsvorrichtung (10).
